# EUROPÄISCHE PATENTSCHRIFT

(11) **EP 3 606 823 B1**
(45) Veröffentlichungstag und Bekanntmachung des Hinweises auf die Patenterteilung: **23.08.2023**
(21) Anmeldenummer: 18715669.0
(22) Anmeldetag: 03.04.2018
(51) Int. Cl.: B64D 11/06, B60N 2/02

(54) **FLUGZEUGSITZVORRICHTUNG**
AIRCRAFT SEATING DEVICE
DISPOSITIF DE SIÈGE D'AVION

(30) Priorität: 03.04.2017 DE 102017107140; 13.06.2017 DE 102017113037
(43) Veröffentlichungstag der Anmeldung: 12.02.2020
(73) Patentinhaber: Recaro Aircraft Seating GmbH & Co. KG, 74523 Schwäbisch Hall (DE)
(72) Erfinder: ITZINGER, Andreas, 74545 Michelfeld (DE); BAUMANN, Jürgen, 78351 Bodman-Ludwigshafen (DE); PARRILLA CALLE, Javier, 70188 Stuttgart (DE); ERB, Andreas, 74523 Schwäbisch Hall (DE); JUSSLI, Zoltan, 74626 Bretzfeld (DE); HORLACHER, Michael, 74523 Schwäbisch Hall (DE)
(74) Vertreter: Daub, Thomas
(86) Internationale Anmeldenummer: PCT/EP2018/058501
(87) Internationale Veröffentlichungsnummer: WO 2018/185108

(56) Entgegenhaltungen:
- GB-A- 2 497 588
- US-A1- 2005 062 324
- US-A1- 2007 200 524
- US-A1- 2012 267 928
- US-A1- 2016 288 668
- US-B1- 6 237 994

## Beschreibung

### Stand der Technik

Die Erfindung betrifft eine Flugzeugsitzvorrichtung für einen Flugzeugsitz.

Es sind bereits verschiedene Flugzeugsitzvorrichtungen für Flugzeugsitze, mit wenigstens einer Aufständereinheit und mit wenigstens einem, mit der Aufständereinheit gekoppelten Sitzboden, der dazu vorgesehen ist, einen Sitzbereich auszubilden, vorgeschlagen worden.

Aus der US 2012/267928 A1 ist bereits eine Flugzeugsitzvorrichtung für einen Flugzeugsitz gemäß dem Oberbegriff des Anspruchs 1 bekannt.

Die Aufgabe der Erfindung besteht insbesondere darin, eine gattungsgemäße Vorrichtung mit verbesserten Eigenschaften hinsichtlich eines Komforts für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung für einen Flugzeugsitz, mit wenigstens einer Aufständereinheit, mit wenigstens einem, mit der Aufständereinheit gekoppelten Sitzboden, der dazu vorgesehen ist, einen Sitzbereich auszubilden, und dazu wenigstens eine Haupteinheit und wenigstens eine, zwischen einer Verstaustellung und einer Gebrauchsstellung verstellbar zu der Aufständereinheit ausgebildete Teileinheit aufweist, wobei die zumindest eine verstellbare Teileinheit dazu vorgesehen ist, den Sitzbereich in zumindest einer Stellung zu vergrößern, und mit wenigstens einem Betätigungsmechanismus, mittels dessen die verstellbare Teileinheit des Sitzbodens zwischen ihrer Verstaustellung und ihrer Gebrauchsstellung verstellbar ist. Wenigstens ein Verzögerungsmodul ist dazu vorgesehen, die verstellbare Teileinheit nach Wegfall einer Halte- und/oder Verriegelkraft zumindest für ein definiertes Zeitintervall in der Gebrauchsstellung zu halten

Es wird vorgeschlagen, dass eine Verriegelungseinheit dazu vorgesehen ist, die verstellbare Teileinheit in der Gebrauchsstellung mechanisch zu verriegeln, wobei die Verriegelungseinheit während des definierten Zeitintervalls nach Wegfall einer Betätigungskraft in einer Verriegelstellung bleibt und die verstellbare Teileinheit in der Gebrauchsstellung, insofern diese zu dem Zeitpunkt in der Gebrauchsstellung angeordnet ist, hält.

Unter einer "Flugzeugsitzvorrichtung" soll dabei insbesondere eine Vorrichtung verstanden werden, die zumindest einen Teil eines Flugzeugsitzes oder einen gesamten Flugzeugsitz ausbildet. Unter einem "Flugzeugsitz" soll dabei insbesondere ein Sitz verstanden werden, der dazu vorgesehen ist, in einer Flugzeugkabine eines Flugzeugs auf einem Kabinenboden aufgeständert zu werden und auf dem ein Passagier während eines Flugs sitzen kann. Dabei weist der Flugzeugsitz zumindest einen Sitzboden und eine mit dem Sitzboden gekoppelte Rückenlehne auf, wobei die Rückenlehne vorzugsweise verschwenkbar mit dem Sitzboden verbunden ist, wodurch der Flugzeugsitz vorzugsweise in unterschiedliche Funktionsstellungen bewegbar ist. Unter einer "Aufständereinheit" soll dabei insbesondere eine Einheit verstanden werden, über die der Flugzeugsitz fest mit einem Kabinenboden gekoppelt ist und dazu insbesondere wenigstens einen Sitzfuß, der über eine Befestigungsschiene fest mit dem Kabinenboden gekoppelt ist, und wenigstens ein mit dem Sitzfuß verbundenes Querelement aufweist, an dem zumindest ein Sitzteiler und/oder ein Sitzboden des Flugzeugsitzes angebunden ist. Unter einer "Rückenlehne" soll dabei insbesondere ein Element des Flugzeugsitzes verstanden werden, das zumindest einen Teil einer Rückenlehnenauflagefläche ausbildet, an der ein auf dem Flugzeugsitz sitzender Passagier seinen Rücken anlehnen kann. Dabei umfasst die Rückenlehne vorzugsweise zumindest einen Grundkörper und eine Polstereinheit, welche die Rückenlehnenauflagefläche ausbildet. Die Rückenlehne weist vorzugsweise einen tragenden Rahmen auf, über den die Rückenlehne mit der Aufständereinheit und/oder dem Sitzboden verbunden ist. Ein Rahmen der Rückenlehne kann dabei als ein umlaufender Rahmen, beispielsweise aus einem Leichtmetall, oder einstückig mit dem Rest der Rückenlehne aus einem selbsttragenden Faserverbundwerkstoff gebildet sein. Die Rückenlehne ist dabei an einem hinteren Ende des Sitzbodens angeordnet und erstreckt sich von der Sitzbodeneinheit nach oben, von einer Aufständereinheit weg. Unter einem "Sitzboden" soll dabei insbesondere ein Bauteil eines Flugzeugsitzes verstanden werden, das einen Sitzbereich für einen Passagier ausbildet. Unter einem "Sitzbereich" soll dabei insbesondere ein Bereich des Flugzeugsitzes verstanden werden, der dazu vorgesehen ist, dass ein Passagier, insbesondere während eines Flugs, darauf sitzt. Unter einer "Haupteinheit" soll dabei insbesondere eine separat von der verstellbaren Teileinheit ausgebildete Einheit des Sitzbodens verstanden werden, der für sich allein eine Sitzfläche ausbildet, auf der ein Passagier auf dem Flugzeugsitz sitzen kann. Die Haupteinheit des Sitzbodens weist dabei vorzugsweise einen Grundkörper und eine auf dem Grundkörper angebrachte Polstereinheit auf. Der Grundkörper ist dabei als eine Sitzschale ausgebildet. Grundsätzlich ist es auch denkbar, dass der Grundkörper von einer Bespannung, insbesondere von einem bespannten Rahmen ausgebildet ist und dazu insbesondere einen Rahmen und ein von dem Rahmen aufgespanntes Gewebe aufweist, auf dem eine Polstereinheit angeordnet ist. Die Haupteinheit des Sitzbodens ist dabei vorzugsweise mit der Rückenlehne gekoppelt und zwischen einer Sitzstellung und einer Komfortstellung verstellbar. Dabei wird die Haupteinheit des Sitzbodens bei einer Verstellung zwischen der Sitzstellung und der Komfortstellung vorzugsweise um ein vorderes Querelement der Aufständereinheit verschwenkt. Die Haupteinheit des Sitzbodens bildet in einer Sitzstellung des Flugzeugsitzes vorzugsweise allein eine Sitzfläche aus, die ausreicht, dass ein durchschnittlicher Passagier darauf normal sitzen kann. Die Haupteinheit des Sitzbodens reicht in einem montierten Zustand von der Rückenlehne bis an einen Bereich des vorderen Querelements der Aufständereinheit. Die Haupteinheit bildet vorzugsweise ohne die verstellbare Teileinheit einen ausreichend großen Sitzbereich aus. Unter einer "verstellbaren Teileinheit" soll dabei insbesondere eine separat von der Haupteinheit ausgebildete Einheit des Sitzbodens verstanden werden, die eine Zusatzsitzfläche ausbildet, die für sich allein vorzugsweise keine eigenständige Sitzfläche ausbildet, auf der ein Passagier sitzen könnte. Die verstellbare Teileinheit weist dabei in Querrichtung eine Breite auf, die im Wesentlichen gleich groß ist wie eine Breite der Haupteinheit des Sitzbodens. Die verstellbare Teileinheit weist eine Tiefe auf, die in einem Bereich zwischen 10 cm und 25 cm liegt. Vorzugswese liegt die Tiefe bei 15 cm. Die Tiefe der verstellbaren Teileinheit ist dabei das Maß, um die die verstellbare Teileinheit den Sitzboden in einer Gebrauchsstellung in einer Sitzrichtung verlängert. Die verstellbare Teileinheit ist dazu vorgesehen, den Sitzbereich des Sitzbodens in zumindest einer Stellung, insbesondere in wenigstens einer Gebrauchsstellung, zu vergrößern. In der wenigstens einen Gebrauchsstellung ist die verstellbare Teileinheit dazu vorgesehen, zusammen mit der Haupteinheit den Sitzbereich des Sitzbodens auszubilden. Die verstellbare Teileinheit ist dabei insbesondere dazu vorgesehen, an einem, in Sitzrichtung gesehen, vorderen Ende der Haupteinheit angeordnet zu sein und dabei den Sitzbereich der Haupteinheit nach vorne hin zu erweitern. Die verstellbare Teileinheit ist dabei vorzugsweise indirekt mit der Haupteinheit verbunden. Die verstellbare Teileinheit ist insbesondere nicht direkt mit der Haupteinheit des Sitzbodens verbunden. Die verstellbare Teileinheit ist vorzugsweise über die Aufständereinheit mit der Haupteinheit der Sitzbodeneinheit gekoppelt, die ebenfalls an der Aufständereinheit angebunden ist. Unter einer "Verstaustellung" soll dabei insbesondere eine Stellung verstanden werden, in der eine Einheit, insbesondere die verstellbare Teileinheit, möglichst platzsparend angeordnet ist, insbesondere möglichst platzsparend an dem Flugzeugsitz angeordnet ist. Dabei ist die verstellbare Teileinheit in der Verstaustellung nicht in ihrer vorgesehenen Weise von einem Passagier verwendbar. Die verstellbare Teileinheit erweitert den Sitzbereich des Sitzbodens in ihrer Verstaustellung nicht. In der Verstaustellung ist die verstellbare Teileinheit vorzugsweise vor die Haupteinheit des Sitzbodens geklappt und erstreckt sich nach unten in Richtung eines Kabinenbodens. Dabei ist die verstellbare Teileinheit in einer Weise nach unten geklappt und weist eine entsprechende Tiefe auf, dass eine Schwimmwestentasche in einem Bereich der Aufständereinheit des Flugzeugsitzes angeordnet und einfach von einem Passagier ergriffen werden kann. In der Verstaustellung ist die Zusatzsitzfläche, die die verstellbare Teileinheit ausbildet, um im Wesentlichen 90 Grad zu der Sitzfläche der Haupteinheit verschwenkt. Unter einer "Gebrauchsstellung" soll dabei insbesondere eine Stellung verstanden werden, in der eine Einheit, insbesondere die verstellbare Teileinheit, so in einer Stellung und/oder Ausrichtung angeordnet ist, dass sie in ihrer vorgesehenen Weise von einem auf dem Flugzeugsitz sitzenden Passagier genutzt werden kann. Eine Gebrauchsstellung der verstellbaren Teileinheit ist als eine Stellung der verstellbaren Teileinheit definiert, in der die verstellbare Teileinheit zumindest um 5 Grad aus ihrer Verstaustellung herausgeschwenkt ist. In einer Gebrauchsstellung vergrößert die verstellbare Teileinheit den Sitzbereich des Sitzbodens, indem die verstellbare Teileinheit den von der Haupteinheit ausgebildeten Sitzbereich erweitert. In einer maximalen Gebrauchsstellung ist die verstellbare Teileinheit um einen maximalen Verstellwinkel verschwenkt, in dem die Zusatzsitzfläche im Wesentlichen parallel zu der Sitzfläche der Haupteinheit ausgerichtet ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Dadurch kann vorteilhaft einfach ein Sitzboden bereitgestellt werden, dessen Sitzfläche bei Bedarf vorteilhaft einfach erweitert werden kann, um so eine vorteilhaft komfortable und große Sitzfläche zu erreichen. Vorteilhaft kann der Sitzboden in einem Zustand, in dem kein Passagier auf dem Sitzboden sitzt, in Sitzrichtung vorteilhaft klein ausgebildet werden und in einem Zustand, in dem ein Passagier auf dem Sitzboden sitzt, auf eine komfortable Größe erweitert werden. Unter einem "Betätigungsmechanismus" soll dabei insbesondere ein Mechanismus verstanden werden, über den die verstellbare Teileinheit zwischen einer Verstaustellung und einer Gebrauchsstellung von einem Bediener, wie insbesondere von einem Passagier verstellt werden kann, wobei der Betätigungsmechanismus dabei zu einer rein händischen Betätigung von dem Bediener, oder zu einer Verstellung mittels eines Aktuators, der von einem Bediener beispielsweise über ein Bedienelement angesteuert wird, vorgesehen ist.

So könnten beispielsweise insbesondere für Fluggastsitzreihen, die hinter einem Notausstieg eines Flugzeugsitzes angeordnet sind, vorteilhaft schmale Sitzböden bereitgestellt werden, wenn kein Passagier auf ihnen sitzt, wodurch die Fluchtwege zu den Notausgängen vorteilhaft breit ausgebildet werden können, ohne einen Komfort der Fluggastsitze einzuschränken.

Weiter wird vorgeschlagen, dass die verstellbare Teileinheit dazu vorgesehen ist, mittels des wenigstens einen Betätigungsmechanismus zwischen ihrer Verstaustellung und ihrer Gebrauchsstellung stufenlos arretierbar zu sein. Unter "stufenlos arretierbar zu sein" soll dabei insbesondere verstanden werden, dass die verstellbare Teileinheit in jeder beliebigen Position zwischen der Verstaustellung und der maximalen Gebrauchsstellung in ihrer Stellung zu der Aufständereinheit fixiert werden kann, wobei Kräfte, die auf die verstellbare Teileinheit einwirken, über eine Lagerung und den Betätigungsmechanismus in die Aufständereinheit abgeleitet werden. Dadurch kann die verstellbare Teileinheit besonders individuell von einem Passagier eingestellt werden und der Flugzeugsitz dadurch besonders vorteilhaft komfortabel für verschiedene Passagiere ausgebildet werden.

Ferner wird vorgeschlagen, dass der wenigstens eine Betätigungsmechanismus wenigstens ein Bedienelement aufweist, über das die verstellbare Teileinheit durch einen Passagier verstellbar ist. Unter einem "Bedienelement" soll insbesondere ein Element verstanden werden, das dazu vorgesehen ist, bei einem Bedienvorgang eine Eingabegröße von einem Bediener aufzunehmen und insbesondere unmittelbar von einem Bediener kontaktiert zu werden, wobei ein Berühren des Bedienelements sensiert wird und/oder eine auf das Bedienelement ausgeübte Betätigungskraft sensiert und/oder mechanisch zur Betätigung einer Einheit weitergeleitet wird. Dabei ist das Bedienelement vorzugsweise als ein Druckknopf, der von einer Seite aus durch Aufbringen eines Drucks bedienbar ist, ausgebildet. Grundsätzlich ist es auch denkbar, dass das Bedienelement als ein Druckknopf ausgebildet ist, der durch Druckbeaufschlagung von zwei Seiten, also durch Zusammendrücken, bedienbar ist. Grundsätzlich ist es ebenso denkbar, dass das Bedienelement als ein Drehelement ausgebildet ist, das durch Beaufschlagung mit einem Moment bedienbar ist und bei einem Bedienvorgang verdreht wird. Unter "durch einen Passagier verstellbar" soll dabei insbesondere verstanden werden, dass eine Verstellung als direkte Folge der Betätigung des Bedienelements durch einen Bediener, der insbesondere ein auf dem Flugzeugsitz sitzender Passagier ist, erfolgt. Dabei erfolgt eine Verstellung der verstellbaren Teileinheit vorzugsweise entweder ohne weitere Krafteinwirkung des Passagiers auf die verstellbare Teileinheit, indem ein durch Betätigung des Bedienelements betätigtes Aktuatorelement eine Betätigungskraft auf die verstellbare Teileinheit ausübt, durch eine durch einen Passagier auf die verstellbare Teileinheit ausgeübte Betätigungskraft oder durch eine Kombination einer durch ein Aktuatorelement bereitgestellten Betätigungskraft und einer durch einen Passagier ausgeübten Betätigungskraft. Dadurch kann die verstellbare Teileinheit besonders einfach von einem Bediener verstellt werden.

Es wird weiterhin vorgeschlagen, dass der Betätigungsmechanismus wenigstens eine Sensorvorrichtung umfasst, die zur Verstellung der verstellbaren Teileinheit wenigstens eine Kenngröße erfasst. Unter einer "Sensorvorrichtung" soll in diesem Zusammenhang insbesondere eine Vorrichtung verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, erfolgen kann. Es sind verschiedene, dem Fachmann als sinnvoll erscheinende Sensoreinheiten denkbar. Kenngrößen, die mittels der Sensorvorrichtung erfassbar sind, sind dabei unter anderem insbesondere ein Druck, ein Gewicht und/oder eine Länge. Dadurch kann eine Verstellung der verstellbaren Teileinheit vorteilhaft durch vorgegebene Parameter veranlasst werden.

Des Weiteren wird vorgeschlagen, dass der Betätigungsmechanismus wenigstens ein Aktuatorelement umfasst, das von dem Bedienelement und/oder von der Sensorvorrichtung zur Verstellung der verstellbaren Teileinheit ansteuerbar ist. Unter einem "Aktuatorelement" soll dabei insbesondere ein Element verstanden werden, das zumindest in einem betätigten Zustand dazu vorgesehen ist, eine Betätigungskraft bereitzustellen. Dadurch kann die verstellbare Teileinheit besonders vorteilhaft verstellt werden.

Weiterhin wird vorgeschlagen, dass das Aktuatorelement als ein Federelement ausgebildet ist. Unter einem "Federelement" soll insbesondere ein Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einer "Erstreckung" eines Elements soll insbesondere ein maximaler Abstand zweier Punkte einer senkrechten Projektion des Elements auf eine Ebene verstanden werden. Dabei ist das Federelement vorzugsweise als eine verstellbare Gasdruckfeder ausgebildet. Dabei ist eine verstellbare Gasdruckfeder von einem Passagier betätigbar und gibt lediglich in einem betätigten Zustand eine Betätigungskraft aus und ist in einem unbestätigten Zustand verriegelt. Grundsätzlich wäre es auch denkbar, dass das Federelement als eine andere, dem Fachmann als sinnvoll erscheinende Feder ausgebildet ist, beispielsweise als eine Spiralfeder. Dadurch kann das Aktuatorelement besonders einfach ausgebildet werden.

Außerdem wird vorgeschlagen, dass das Aktuatorelement als ein elektrischer Stellmotor ausgebildet ist. Dadurch kann das Aktuatorelement besonders vorteilhaft zur genauen Verstellung der Teileinheit ausgebildet werden.

Es wird weiter vorgeschlagen, dass die Sensorvorrichtung zumindest dazu vorgesehen ist, zur Auslösung der Verstellung der verstellbaren Teileinheit eine auf den Sitzboden wirkende Sitzkraft zu erfassen. Dabei wird durch die auf den Sitzboden wirkende Sitzkraft vorzugsweise eine Verstellung der verstellbaren Teileinheit aus der Verstaustellung in eine Gebrauchsstellung ausgelöst. Unter einer "auf den Sitzboden wirkenden Sitzkraft" soll dabei insbesondere eine Kraft verstanden werden, die ein Passagier durch sein Gewicht auf den Sitzboden, insbesondere den von der Haupteinheit ausgebildeten Sitzbereich, ausübt. Dadurch kann die verstellbare Teileinheit besonders vorteilhaft automatisch verstellt werden, sobald ein Passagier auf dem Flugzeugsitz Platz nimmt.

Weiterhin wird vorgeschlagen, dass die verstellbare Teileinheit zwei Anbindungsbereiche aufweist, über die die Teileinheit an die Aufständereinheit angebunden ist, wobei die Anbindungsbereiche in äußeren Bereichen der Teileinheit angeordnet sind. Unter einem "Anbindungsbereich" soll dabei insbesondere ein Bereich verstanden werden, an dem ein Tragelement an die Teileinheit fest anbindbar ist, über das die Teileinheit fest mit der Aufständereinheit gekoppelt ist. Unter einem "äußeren Bereichen der Teileinheit" soll dabei insbesondere ein Bereich verstanden werden, der sich von einer Seitenkante der Teileinheit in Querrichtung weniger als 10 cm, vorzugsweise weniger als 5 cm und in einer besonders vorteilhaften Ausgestaltung weniger als 1 cm erstreckt. Dadurch kann eine Lagerung der verstellbaren Teileinheit besonders vorteilhaft erfolgen und Tragelemente zur Anbindung an die Aufständereinheit können in vorteilhaften, für einen Passagier nicht störenden Bereichen angeordnet sein.

Zudem wird vorgeschlagen, dass die verstellbare Teileinheit zumindest von einer Bespannung gebildet ist. Unter einer "Bespannung" soll dabei insbesondere ein von zumindest zwei beabstandet zueinander angeordneten Seitenelementen gehaltenes dünnes Gewebe verstanden werden, das eine Fläche ausbildet, auf der insbesondere ein Komfortelement zur Ausbildung der Zusatzsitzfläche angebracht ist. Die Seitenelemente, die das Gewebe aufspannen, können dabei vorzugsweise als ein zusammenhängender Rahmen ausgebildet sein. Dadurch kann die verstellbare Teileinheit besonders leicht ausgebildet werden.

Weiterhin wird vorgeschlagen, dass die Verstellung der verstellbaren Teileinheit an eine Verstellung der Rückenlehne gekoppelt ist. Unter "an die Verstellung der Rückenlehne gekoppelt", soll dabei insbesondere verstanden werden, dass eine Verstellung der Rückenlehne zwischen ihrer Sitzstellung und ihrer Komfortstellung einen direkten Einfluss auf die Stellung der verstellbaren Teileinheit hat. Dabei erfolgt bei einer Verstellung der Rückenlehne zwischen ihrer Sitzstellung und ihrer Komfortstellung vorzugsweise automatisiert eine Verstellung der verstellbaren Teileinheit. Dadurch kann die Verstellung der verstellbaren Teileinheit vorteilhaft erfolgen.

Weiter wird vorgeschlagen, dass die Rückenlehne wenigstens ein Zusatzkissen umfasst, das zwischen einer Sitzstellung und einer Komfortstellung zu der Rückenlehne verstellbar ist. Unter einem "Zusatzkissen" soll dabei insbesondere ein von der Rückenlehne und einem Komfortpolster der Rückenlehne, die eine Rückenlehnenfläche ausbildet, zumindest teilweise getrenntes Kissen verstanden werden, das dazu vorgesehen ist, in einem unteren Rückenlehnenbereich angeordnet zu werden, um dem Passagier in dem unteren Rückenbereich eine Abstützung zu bieten, wenn der Passagier mit seinem Gesäß weit nach vorne gerückt ist. Das Zusatzkissen ist dabei vorteilhaft mit der Rückenlehne, insbesondere mit einem Komfortpolster oder einem Schonbezug der Rückenlehne, verbunden und zwischen zwei Stellungen verstellbar. Das Zusatzkissen ist vorzugsweise als ein Schwenkkissen ausgebildet, das zwischen einer Komfortposition und einer Sitzposition relativ zu der Rückenlehne verschwenkt werden kann. Grundsätzlich ist es auch denkbar, dass das Zusatzkissen über eine Linearführung zwischen zumindest zwei Stellungen verstellbar ist. Dadurch kann eine besonders vorteilhaft komfortable Rückenlehne bereitgestellt werden.

Weiter wird vorgeschlagen, dass die Haupteinheit des Sitzbodens eine Erstreckung in Sitzrichtung aufweist, die mindestens 275 mm beträgt. Unter "mindestens 275 mm" soll dabei insbesondere mindestens 275 mm, vorzugsweise maximal 275 mm und in einer besonders vorteilhaften Ausgestaltung maximal 300 mm verstanden werden. Unter einer "Erstreckung des Sitzbodens in Sitzrichtung" soll dabei insbesondere eine in Sitzrichtung dem Passagier zum Sitzen zur Verfügung stehende Sitztiefe verstanden werden, die insbesondere auf einer Höhe des Sitzpolsters von einem Schnittpunkt des Sitzbodens mit der Rückenlehne bis zu einer vorderen Kante des Sitzbodens gemessen wird. Dadurch kann der Hauptteil des Sitzbodens besonders vorteilhaft ausgebildet werden, sodass insbesondere kleinere Passagiere, wie insbesondere Kinder lediglich auf dem Hauptteil des Sitzbodens gemütlich sitzen können.

Ferner wird vorgeschlagen, dass der Betätigungsmechanismus für eine rein händische Betätigung der verstellbaren Teileinheit von der Verstaustellung in die Gebrauchsstellung vorgesehen ist. Unter einer "rein händischen Betätigung" soll dabei insbesondere verstanden werden, dass eine Betätigungskraft mittels der die verstellbare Teileinheit von der Verstaustellung in die Gebrauchsstellung verstellt wird, rein durch eine Muskelkraft eines Bedieners, wie insbesondere eines Passagiers, gebildet ist. Dabei wird bei einer rein händischen Betätigung die verstellbare Teileinheit vorzugsweise mittels der Hand ergriffen und dann durch Bewegung der Hand in eine entsprechende Stellung, wie insbesondere die Gebrauchsstellung gebracht. Dadurch kann der Betätigungsmechanismus zur Verstellung der verstellbaren Teileinheit besonders einfach und kostengünstig ausgebildet werden.

Zudem wird vorgeschlagen, dass die Flugzeugsitzvorrichtung wenigstens einen Verriegelungsmechanismus aufweist, der zur Verriegelung der verstellbaren Teileinheit in einer Gebrauchsstellung, dazu vorgesehen ist, durch eine auf den Sitzboden wirkende Sitzkraft in eine Verriegelstellung gebracht zu werden. Unter einer "auf den Sitzboden wirkende Sitzkraft" soll dabei insbesondere eine Kraft verstanden werden, die auf den Sitzboden wirkt und in Richtung eines Kabinenbodens ausgerichtet ist, wobei die Sitzkraft dabei vorzugsweise von einer Gewichtskraft eines korrekt auf dem Sitzboden des Flugzeugsitzes sitzenden Passagiers gebildet ist. Dadurch kann die verstellbare Teileinheit vorteilhaft nur dann in der Gebrauchsstellung verriegelt werden wenn ein Passagier auf dem Flugzeugsitz sitzt, wodurch insbesondere vorteilhaft eine Verriegelung gelöst wird sobald ein Passagier aufsteht.

Des Weiteren wird vorgeschlagen, dass der Verriegelungsmechanismus wenigstens ein Betätigungselement aufweist, das in einem Sitzbereich des Sitzbodens angeordnet ist. Unter einem "Betätigungselement" soll dabei insbesondere eine Element verstanden werden, dass zur Betätigung des Verriegelungsmechanismus vorgesehen ist, insbesondere den Verriegelungsmechanismus freigibt, sodass dieser in eine Verriegelstellung gebracht werden kann. Das Betätigungselement ist dabei als ein von einem Bediener, insbesondere dem Passagier betätigbares Element ausgebildet, das bei einer Betätigung von einer Ruhestellung wenigstens in eine Betätigungsstellung gebracht werden kann. Das Betätigungselement ist dabei insbesondere als ein Element ausgebildet, das eine auf den Sitzbereich des Sitzbodens, insbesondere auf die Haupteinheit, durch einen Passagier bewirkte Sitzkraft betätigbar ist. Das Betätigungselement ist vorzugsweise als ein flächiges Element ausgebildet, das vorzugsweise mittig in dem Sitzbereich angeordnet ist. Grundsätzlich ist es auch denkbar, dass das Betätigungselement als ein Bügel ausgebildet ist, der den Sitzbereich des Sitzbodens in einer Querrichtung, die orthogonal auf der Sitzrichtung steht, überspannt. Grundsätzlich ist es auch denkbar, dass der Verriegelungsmechanismus zwei oder mehr flächige Betätigungselemente und/oder zwei oder mehr als Bügel ausgebildete Betätigungselemente aufweist, wobei die Betätigungselemente in unterschiedlichen Bereichen des Sitzbereichs, vorzugsweise in unterschiedlichen Bereichen in der Querrichtung, angeordnet sind. Grundsätzlich ist es auch denkbar, dass das Betätigungselement einstückig mit dem Sitzboden, insbesondere mit dem Hauptteil des Sitzbodens ausgebildet ist. Dabei ist es denkbar, dass der Sitzboden, insbesondere der Hauptteil des Sitzbodens das Betätigungselement ausbildet. Dabei wäre es denkbar, dass der gesamte Sitzboden, insbesondere der Hauptteil des Sitzbodens bei einer Betätigung, insbesondere durch ein Hinsetzen eines Passagiers eine Bewegung in einer Vertikalrichtung ausführt. Dadurch kann der Verriegelungsmechanismus besonders vorteilhaft einfach zur Betätigung durch eine Sitzkraft ausgebildet werden.

Weiterhin wird vorgeschlagen, dass das Betätigungselement zumindest 30% eines Teilsitzbereichs der Haupteinheit des Sitzbodens überspannt. Dadurch kann das Betätigungselement besonders vorteilhaft ausgebildet werden. Dabei überspannt das Betätigungselement zumindest 30% einer Fläche des Teilsitzbereichs der Haupteinheit. Unter "zumindest 30%" soll dabei insbesondere zumindest 30%, vorzugsweise zumindest 40% und in einer besonders vorteilhaften Ausgestaltung zumindest 50% verstanden werden.

Erfindungsgemäß weist die Flugzeugsitzvorrichtung wenigstens ein Verzögerungsmodul auf, das dazu vorgesehen ist, die verstellbare Teileinheit nach Wegfall einer Halte- und/oder Verriegelkraft zumindest für ein definiertes Zeitintervall in der Gebrauchsstellung zu halten. Unter einem "Verzögerungsmodul" soll dabei insbesondere ein Modul verstanden werden, das wenigstens ein Dämpfungselement, wie insbesondere ein Federelement umfasst, das dazu vorgesehen ist, eine Kraft bereitzustellen, die die verstellbare Teileinheit zumindest für ein definiertes Zeitintervall direkt oder indirekt in der Gebrauchsstellung hält. Das Verzögerungsmodul ist insbesondere dazu vorgesehen, während des definierten Zeitintervalls ein Verstellen der verstellbaren Teileinheit von der Gebrauchsstellung in die Verstaustellung zu verhindern. Dabei ist es denkbar, dass eine von dem Verzögerungsmodul ausgeübte Kraft direkt auf die verstellbare Teileinheit wirkt und diese so zeitweise in der Verstaustellung hält, oder, dass eine von dem Verzögerungsmodul ausgeübte Kraft auf ein Element des Verriegelungsmechanismus wirkt, und so eine Entriegelung der Entriegelungseinheit für ein definiertes Zeitintervall verhindert, sodass die verstellbare Teileinheit für dieses definierte Zeitintervall in der Gebrauchsstellung verriegelt bleibt. Unter einer "Haltekraft" soll dabei insbesondere eine Kraft verstanden werden, die auf die verstellbare Teileinheit wirkt um diese in der Gebrauchsposition zu halten, wobei die Haltekraft dabei vorzugsweise über das Abstützmodul in die verstellbare Teileinheit eingeleitet wird. Unter einer "Verriegelkraft" soll dabei insbesondere eine Kraft verstanden werden, die zur Verriegelung auf ein Element der Verriegelungseinheit, insbesondere auf das Betätigungselement der Verriegelungseinheit wirkt, wobei die Verriegelkraft dabei vorzugsweise als eine Sitzkraft, eines auf dem Flugzeugsitz sitzenden Passagiers ausgebildet ist. Unter einem "definierten Zeitintervall" soll dabei insbesondere eine Zeitspanne in einem Bereich von 1 Sekunde bis 30 Sekunden verstanden werden. Unter "für ein definiertes Zeitintervall in der Gebrauchsstellung halten" soll dabei insbesondere für dieses definierte Zeitintervall halten und danach freigeben verstanden werden, sodass die verstellbare Teileinheit nach Ablauf des Zeitintervalls von der Gebrauchsstellung in die Verstaustellung verfahren wird. So kann die verstellbare Teileinheit vorteilhaft noch in der Gebrauchsstellung gehalten werden, wenn ein Passagier kurz von dem Flugzeugsitz aufsteht, oder sein Gewicht so verlagert, dass eine Verriegelung der Verriegelungseinheit aufgehoben ist, beispielsweise wenn der Passagier eine andere Sitzposition einnehmen will. Dadurch kann ein Komfort der Flugzeugsitzvorrichtung vorteilhaft erhöht werden.

Die erfindungsgemäße Flugzeugsitzvorrichtung soll hierbei nicht auf die oben beschriebene Anwendung und Ausführungsform beschränkt sein. Insbesondere kann die erfindungsgemäße Flugzeugsitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung sind fünf Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Flugzeugsitzes mit einer Flugzeugsitzvorrichtung in einem ersten Ausführungsbeispiel, mit einer verstellbaren Teileinheit in ihrer Verstaustellung
- Fig. 2: eine schematische Darstellung des Flugzeugsitzes mit einer Flugzeugsitzvorrichtung, mit einer verstellbaren Teileinheit in ihrer Gebrauchsstellung
- Fig. 3: eine schematische Detailansicht eines Teils des Flugzeugsitzes mit einer Flugzeugsitzvorrichtung, mit einer verstellbaren Teileinheit in ihrer Gebrauchsstellung,
- Fig. 4: eine schematische Darstellung des Flugzeugsitzes mit einer Rückenlehne und einem Kissen,
- Fig. 5: eine schematische Darstellung einer Flugzeugsitzvorrichtung in einem zweiten Ausführungsbeispiel,
- Fig. 6: eine schematische Darstellung einer Flugzeugsitzvorrichtung in einem dritten Ausführungsbeispiel,
- Fig. 7: eine schematische Ansicht einer verstellbaren Teileinheit eines Sitzbodens in einem vierten Ausführungsbeispiel,
- Fig. 8: eine schematische Schnittansicht einer erfindungsgemäßen Flugzeugsitzvorrichtung in einem fünften Ausführungsbeispiel mit einer verstellbaren Teileinheit in einer Verstaustellung und einer Verriegelungseinheit in einer Freigabestellung,
- Fig. 9: eine schematische Schnittansicht der verstellbaren Teileinheit in einer Gebrauchsstellung und einer Verriegelungseinheit in einer Verriegelstellung,
- Fig. 10: eine schematische Schnittansicht der verstellbaren Teileinheit in einer Stellung zwischen der Gebrauchsstellung und Verstaustellung und einer Verriegelungseinheit in einer Verriegelstellung,
- Fig. 11: eine Detailansicht eines Verriegelelements der Verriegelungseinheit,
- Fig. 12: eine schematische Seitenansicht eines Flugzeugsitzes mit der Flugzeugsitzvorrichtung und einer verstellbaren Teileinheit in einer Gebrauchsstellung und
- Fig. 13: und eine schematische Darstellung des Flugzeugsitzes mit der Flugzeugsitzvorrichtung und einer verstellbaren Teileinheit in einer Verstaustellung.

### Beschreibung der Ausführungsbeispiele

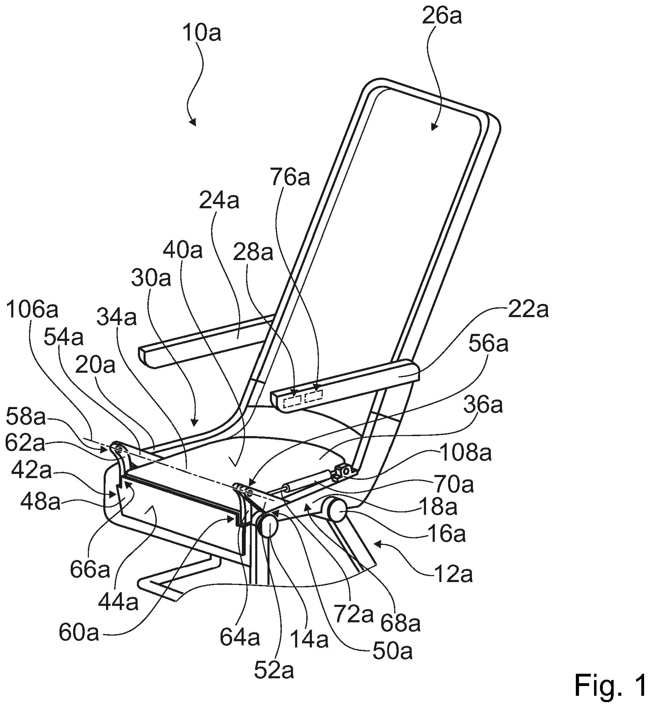

Die Figuren 1 bis 4 zeigen ein erstes Ausführungsbeispiel einer Flugzeugsitzvorrichtung. Die Flugzeugsitzvorrichtung ist als ein Teil eines Flugzeugsitzes 10a ausgebildet. Die Flugzeugsitzvorrichtung umfasst eine Aufständereinheit 12a, mittels der der Flugzeugsitz 10a auf einem Kabinenboden einer Flugzeugkabine angebracht ist. Der Flugzeugsitz 10a ist dabei vorzugsweise als Teil einer nicht näher dargestellten Sitzreihe ausgebildet. Grundsätzlich ist es aber auch denkbar, dass der Flugzeugsitz 10a als ein Einzelsitz ausgebildet ist. Mittels der Aufständereinheit 12a ist der Flugzeugsitz 10a mit dem Kabinenboden gekoppelt. Mittels der Aufständereinheit 12a ist der Flugzeugsitz 10a auf einer Aufständerebene aufständerbar. Der Kabinenboden bildet die Aufständerebene aus. Die Aufständereinheit 12a weist Sitzfüße auf, die zur Montage in der Flugzeugkabine über Verbindungselemente mit Führungsschienen in dem Kabinenboden fest verbunden sind. Die Flugzeugsitzvorrichtung umfasst zwei Querträger 14a, 16a. Die Querträger 14a, 16a sind als Tragrohre ausgebildet. Die Querträger 14a, 16a sind Teil der Aufständereinheit 12a und verlaufen in Querrichtung des Flugzeugsitzes 10a. Grundsätzlich wäre es auch denkbar, dass die Flugzeugsitzvorrichtung eine andere Anzahl an Querträgern 14a, 16a aufweist, beispielsweise einen einzelnen Querträger.sie Flugzeugsitzvorrichtung umfasst zwei Sitzteiler 18a, 20a, die den Flugzeugsitz 10a seitlich begrenzen. Die Sitzteiler 18a, 20a sind mit den Querträgern 14a, 16a verbunden. Die Sitzteiler 18a, 20a sind dabei im Wesentlichen dem Stand der Technik entsprechend ausgebildet und deshalb hier nicht näher beschrieben. Die Flugzeugsitzvorrichtung umfasst zwei Armlehnen 22a, 24a. Die Armlehnen 22a, 24a sind jeweils an einem Sitzteiler 18a, 20a der Flugzeugsitzvorrichtung angebracht. Die Armlehnen 22a, 24a sind jeweils verschwenkbar an dem entsprechenden Sitzteiler 18a, 20a gelagert.

Die Flugzeugsitzvorrichtung umfasst eine Rückenlehne 26a. Die Rückenlehne 26a ist an einem hinteren Ende des Flugzeugsitzes 10a angeordnet. Die Rückenlehne 26a bildet eine Rückenlehnenfläche aus, an der sich ein auf dem Flugzeugsitz 10a sitzender Passagier mit seinem Rücken anlehnen kann. Die Rückenlehne 26a ist mit der Aufständereinheit 12a gekoppelt. Die Rückenlehne 26a ist verschwenkbar mit der Aufständereinheit 12a gekoppelt. Die Rückenlehne 26a ist dabei zwischen einer Sitzstellung, in der die Rückenlehne 26a im Wesentlichen aufrecht ausgerichtet ist, und einer Komfortstellung, in der die Rückenlehne 26a zu der Aufständerebene geneigt ist, verstellbar. Zur Verstellung der Rückenlehne 26a weist die Flugzeugsitzvorrichtung eine nicht näher dargestellte Lagereinheit und eine Betätigungsvorrichtung auf. Die Betätigungsvorrichtung zur Verstellung der Rückenlehne 26a umfasst ein Bedienelement 28a, über das die Betätigungsvorrichtung betätigbar ist und die Rückenlehne 26a so zwischen ihrer Sitzstellung und ihrer Verstaustellung verstellbar ist. Das Bedienelement 28a ist als ein Druckknopf ausgebildet und in der Armlehne 22a angeordnet. Das Bedienelement 28a ist dabei auf einer Innenseite der Armlehne 22a angeordnet, wodurch es insbesondere einfach durch einen Passagier bedienbar ist. Eine Lagereinheit und eine Betätigungsvorrichtung zur Verstellung der Rückenlehne 26a entsprechen dabei denen, die dem Fachmann aus dem Stand der Technik bekannt sind, und sollen hier deshalb nicht näher erläutert werden.

Die Flugzeugsitzvorrichtung umfasst einen Sitzboden 30a. Der Sitzboden 30a ist dazu vorgesehen, einen Sitzbereich 32a für einen auf dem Flugzeugsitz 10a sitzenden Passagier auszubilden. Der Sitzboden 30a ist mit der Aufständereinheit 12a gekoppelt. Der Sitzboden 30a weist eine Haupteinheit 34a auf. Die Haupteinheit 34a des Sitzbodens 30a bildet einen Sitzbereich 40a aus. Der Sitzbereich 40a der Haupteinheit 34a ist dabei so groß ausgebildet, dass eine Person komfortabel darauf sitzen kann. Die Haupteinheit 34a des Sitzbodens 30a weist einen Grundkörper 36a auf. Der Grundkörper 36a ist als eine Sitzschale ausgebildet. Der Grundkörper 36a ist mit der Aufständereinheit 12a gekoppelt. Der Grundkörper 36a ist beweglich mit der Aufständereinheit 12a verbunden. Der Grundkörper 36a ist mit der Rückenlehne 26a gekoppelt. Bei einer Verstellung der Rückenlehne 26a zwischen der Sitzstellung und der Komfortstellung wird der Grundkörper 36a und damit die Haupteinheit 34a des Sitzbodens 30a ebenfalls zwischen einer Sitzstellung und einer Komfortstellung verschoben. Dabei wird die Haupteinheit 34a um den vorderen Querträger 14a der Aufständereinheit 12a geschwenkt. Die Haupteinheit 34a weist eine Polstereinheit 38a auf. Die Polstereinheit 38a ist auf dem Grundkörper 36a der Haupteinheit 34a fest angebunden. Die Polstereinheit 38a ist dabei aus einem Schaumstoff und einem Bezug gebildet. Die Polstereinheit 38a bildet den Sitzbereich 40a der Haupteinheit 34a aus.

Der Sitzboden 30a weist eine Teileinheit 42a auf. Die Teileinheit 42a des Sitzbodens 30a ist als eine verstellbare Teileinheit 42a ausgebildet. Die verstellbare Teileinheit 42a ist zwischen einer Verstaustellung und einer Gebrauchsstellung zu der Aufständereinheit 12a verstellbar. Die verstellbare Teileinheit 42a ist dazu vorgesehen, einen Sitzbereich 32a des Sitzbodens 30a in einer Stellung zu vergrößern. Dadurch kann ein besonders komfortabler Sitzboden 30a für einen Passagier bereitgestellt werden. Die verstellbare Teileinheit 42a ist dazu vorgesehen, zur Vergrößerung des Sitzbereichs 32a des Sitzbodens 30a den Sitzbereich 40a der Haupteinheit 34a des Sitzbodens 30a zu erweitern. Die verstellbare Teileinheit 42a ist getrennt von der Haupteinheit 34a ausgebildet. Die verstellbare Teileinheit 42a weist insbesondere keine direkte Kopplung mit der Haupteinheit 34a auf. Die verstellbare Teileinheit 42a ist nicht direkt an die Haupteinheit 34a des Sitzbodens 30a angebunden. Die verstellbare Teileinheit 42a bildet zur Erweiterung des Sitzbereichs 40a der Haupteinheit 34a einen Zusatzsitzbereich 44a aus. Die verstellbare Teileinheit 42a umfasst eine Polstereinheit 46a, die den Zusatzsitzbereich 44a ausbildet. Die Polstereinheit 46a ist dabei aus einem Schaumstoff und einem Bezug gebildet. Die verstellbare Teileinheit 42a umfasst einen Grundkörper 48a. Der Grundkörper 48a ist von einem Torsionselement 102a und einem mit dem Torsionselement 102a verbundenen Federblech 104a gebildet. Das Torsionselement 102a ist von einem Torsionsstab gebildet. Das Torsionselement 102a ist dabei als ein länglicher Stab mit einem rechteckigen Querschnitt ausgebildet. Grundsätzlich sind hier auch andere Querschnitte, wie beispielsweise ein Dreiecksquerschnitt oder ein runder Querschnitt denkbar. Das Torsionselement 102a erstreckt sich dabei über eine gesamte Breite der verstellbaren Teileinheit 42a. Grundsätzlich ist es auch denkbar, dass das Torsionselement 102a U-förmig ausgebildet ist. Das Federblech 104a ist mit dem Torsionselement 102a verbunden. Das Federblech 104a ist dabei mit dem Torsionselement 102a vernietet. Grundsätzlich ist es auch denkbar, dass das Federblech 104a auf eine andere Weise, beispielsweise durch eine Verklebung oder eine Verschraubung, fest mit dem Torsionselement 102a verbunden ist. Das Federblech 104a bildet einen Hauptteil des Grundkörpers 48a der verstellbaren Teileinheit 42a aus. Dadurch kann die verstellbare Teileinheit 42a besonders vorteilhaft und insbesondere teilweise nachgiebig ausgebildet werden, sodass ein optimaler Komfort für einen Passagier erreicht werden kann, da sich die verstellbare Teileinheit 42a vorteilhaft an den Passagier anpassen kann. Die Polstereinheit 46a der verstellbaren Teileinheit 42a ist an den Grundkörper 48a angebunden. Die Polstereinheit 46a umschließt den Grundkörper 48a der verstellbaren Teileinheit 42a zumindest im Wesentlichen.

Die verstellbare Teileinheit 42a ist relativ zu der Aufständereinheit 12a verschwenkbar angeordnet. Die verstellbare Teileinheit 42a ist an der Aufständereinheit 12a angelenkt. Zur Anbindung der verstellbaren Teileinheit 42a an die Aufständereinheit 12a weist die Flugzeugsitzvorrichtung ein Lagermodul 50a auf. Über das Lagermodul 50a ist die verstellbare Teileinheit 42a des Sitzbodens 30a verschwenkbar zu der Aufständereinheit 12a und dadurch auch zu der Haupteinheit 34a des Sitzbodens 30a verschwenkbar gelagert. Über das Lagermodul 50a ist die verstellbare Teileinheit 42a des Sitzbodens 30a zwischen ihrer Verstaustellung und ihrer Gebrauchsstellung verschwenkbar. Das Lagermodul 50a weist zwei Lagerböcke 52a, 54a auf. Je einer der Lagerböcke 52a, 54a ist an einem Sitzteiler 18a, 20a angebunden. Die Lagerböcke 52a, 54a sind dadurch in einem Seitenbereich des Sitzbodens 30a angeordnet. Die Lagerböcke 52a, 54a sind starr mit dem jeweiligen Sitzteiler 18a, 20a verbunden. Die Lagerböcke 52a, 54a erstrecken sich von dem jeweiligen Sitzteiler 18a, 20a nach oben, von einer Aufständerebene weg. Die Lagerböcke 52a, 54a sind einstückig mit dem jeweiligen Sitzteiler 18a, 20a ausgebildet. Die Lagerböcke 52a, 54a sind an den jeweiligen Sitzteiler 18a, 20a angeformt. Grundsätzlich ist es auch denkbar, dass die Lagerböcke 52a, 54a getrennt von den Sitzteilern 18a, 20a ausgebildet sind und mittels einer Form-, Kraft- und/oder Kraftschlussverbindung, wie beispielsweise einer Schraubverbindung an den entsprechenden Sitzteiler 18a, 20a montiert sind. Die Lagerböcke 52a, 54a weisen jeweils eine Lageraufnahme 56a, 58a auf. Das Lagermodul 50a weist zwei Haltearme 60a, 62a auf, die schwenkbar an die Lageraufnahmen 56a, 58a der Lagerböcke 52a, 54a angebunden sind. Die Lageraufnahmen 56a, 58a sind als Durchgangslöcher ausgebildet. Die Lageraufnahmen 56a, 58a sind dabei koaxial zueinander ausgebildet. Die Lageraufnahmen 56a, 58a bilden dabei eine Schwenkachse 106a aus, um die die verstellbare Teileinheit 42a verschwenkbar gelagert ist. Die Schwenkachse 106a, um die die verstellbare Teileinheit 42a verschwenkbar ist, ist dabei in der Komfortstellung der Haupteinheit 34a des Sitzbodens 30a in einem Zentrum einer vorderen Kante der Haupteinheit 34a des Sitzbodens 30a angeordnet. Die Haltearme 60a, 62a sind über nicht näher dargestellte Lagerelemente drehbar an den Lageraufnahmen 56a, 58a angebunden. Die Lagerelemente sind dabei vorzugsweise als Lagerstifte ausgebildet. Die Haltearme 60a, 62a sind so über eine Gleitlagerung schwenkbar zu den Lagerböcken 52a, 54a gelagert.

Die verstellbare Teileinheit 42a weist zwei Anbindungsbereiche 64a, 66a auf. Die Anbindungsbereiche 64a, 66a sind dazu vorgesehen, dass die Haltearme 60a, 62a des Lagermoduls 50a an ihnen angebunden werden. Über die Anbindungsbereiche 64a, 66a ist die verstellbare Teileinheit 42a mit dem Lagermodul 50a gekoppelt. Über die Anbindungsbereiche 64a, 66a ist die verstellbare Teileinheit 42a mit der Aufständereinheit 12a verbunden. Die Anbindungsbereiche 64a, 66a sind dabei jeweils in äußeren Bereichen der verstellbaren Teileinheit 42a bzw. der Haupteinheit 34a des Sitzbodens 30a angeordnet. Die Anbindungsbereiche 64a, 66a sind von dem Grundkörper 48a der Teileinheit 42a ausgebildet. Die Anbindungsbereiche 64a, 66a sind von dem Torsionselement 102a des Grundkörpers 48a ausgebildet. Die Haltearme 60a, 62a sind über die Anbindungsbereiche 64a, 66a starr mit dem Grundkörper 48a und damit mit der verstellbaren Teileinheit 42a verbunden.

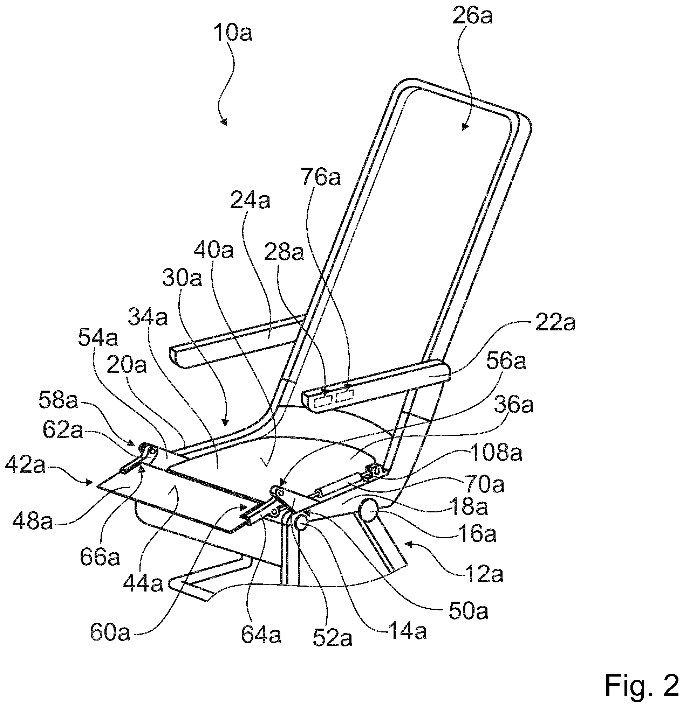

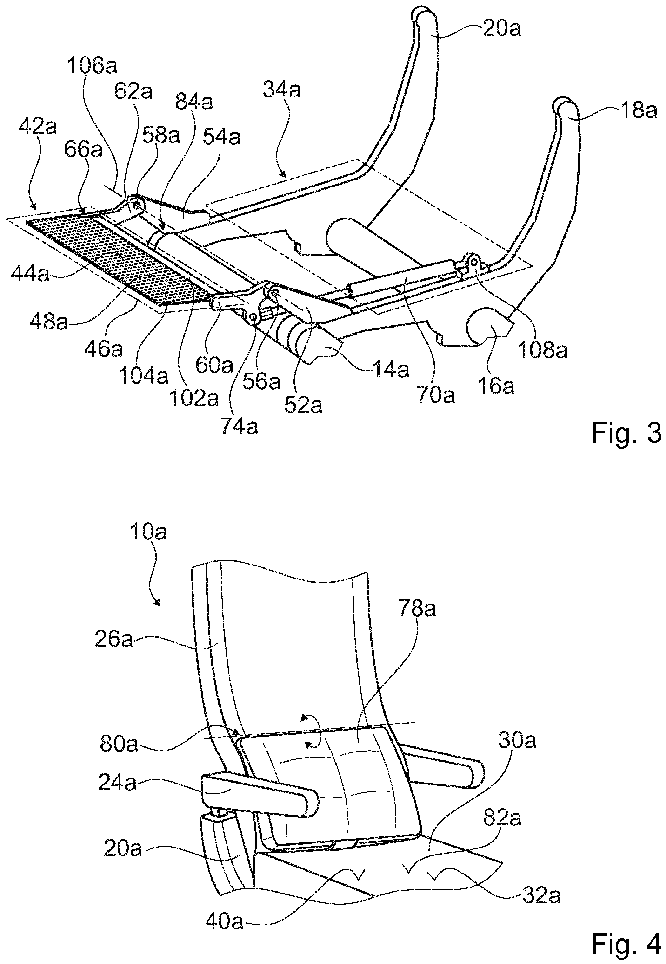

Mittels des Lagermoduls 50a ist die verstellbare Teileinheit 42a zwischen ihrer Verstaustellung und ihrer Gebrauchsstellung verschwenkbar. In der Figur 1 ist die Verstaustellung der verstellbaren Teileinheit 42a gezeigt. In der Verstaustellung ist die verstellbare Teileinheit 42a nach unten in Richtung der Aufständerebene verschwenkt. Die verstellbare Teileinheit 42a ist in der Verstaustellung im Wesentlichen vertikal ausgerichtet. In der Verstaustellung ist die verstellbare Teileinheit 42a unterhalb des Sitzbereichs 40a der Haupteinheit 34a bzw. des Sitzbereichs 32a des Sitzbodens 30a angeordnet. In der Verstaustellung der verstellbaren Teileinheit 42a bildet der Sitzbereich 40a der Haupteinheit 34a den Sitzbereich 32a des Sitzbodens 30a aus. In der Figur 2 ist die Gebrauchsstellung der verstellbaren Teileinheit 42a gezeigt. In der Gebrauchsstellung ist die verstellbare Teileinheit 42a nach oben von der Aufständerebene weg verschwenkt. Die verstellbare Teileinheit 42a ist in der Gebrauchsstellung im Wesentlichen horizontal ausgerichtet. In der Gebrauchsstellung ist die verstellbare Teileinheit 42a im Wesentlichen auf einer gleichen Höhe angeordnet wie der Sitzbereich 40a der Haupteinheit 34a. In der Gebrauchsstellung bildet der Zusatzsitzbereich 44a der verstellbaren Teileinheit 42a zusammen mit dem Sitzbereich 40a der Haupteinheit 34a den Sitzbereich 32a des Sitzbodens 30a aus. Die Gebrauchsstellung, die in der Figur 2 und in Figur 3 dargestellt ist, in der die Teileinheit 42a im Wesentlichen horizontal und im Wesentlichen parallel zu der Haupteinheit 34a des Sitzbodens 30a ausgerichtet ist, ist als eine maximale Gebrauchsstellung ausgebildet. Zwischen der maximalen Gebrauchsstellung und einer minimalen Gebrauchsstellung ist die verstellbare Teileinheit 42a stufenlos verschwenk- und arretierbar. Die minimale Gebrauchsstellung ist dabei als eine Stellung ausgebildet, in der die verstellbare Teileinheit 42a um 5 Grad aus ihrer Verstaustellung in Richtung der maximalen Gebrauchsstellung verschwenkt ist.

Die Flugzeugsitzvorrichtung umfasst einen Betätigungsmechanismus 68a. Der Betätigungsmechanismus 68a ist dazu vorgesehen, die verstellbare Teileinheit 42a zwischen ihrer Verstaustellung und der maximalen Gebrauchsstellung zu verstellen. Der Betätigungsmechanismus 68a ist dazu vorgesehen, die verstellbare Teileinheit 42a zu betätigen. Der Betätigungsmechanismus 68a umfasst ein Aktuatorelement 70a. Das Aktuatorelement 70a ist als ein Federelement ausgebildet. Das Aktuatorelement 70a ist als eine verstellbare Gasdruckfeder ausgebildet. Über das Aktuatorelement 70a ist der Betätigungsmechanismus 68a dazu vorgesehen, die verstellbare Teileinheit 42a zu verschwenken. Das Aktuatorelement 70a ist dazu vorgesehen, in einem betätigten Zustand eine Betätigungskraft auf die verstellbare Teileinheit 42a auszuüben. Die von dem Aktuatorelement 70a auf die verstellbare Teileinheit 42a wirkende Betätigungskraft ist dazu vorgesehen, die verstellbare Teileinheit 42a in ihre maximale Gebrauchsstellung zu verschwenken. Das Aktuatorelement 70a ist oberhalb der Aufständereinheit 12a angeordnet. Das Aktuatorelement 70a ist oberhalb der Sitzteiler 18a, 20a angeordnet. Das Aktuatorelement 70a ist auf einer Oberseite eines Teilbereichs des Sitzteilers 18a angebunden, der die beiden Querträger 14a, 16a der Aufständereinheit 12a verbindet. Das Aktuatorelement 70a ist über einen Anbindungsbock 108a mit dem Sitzteiler 18a verbunden. Der Anbindungsbock 108a ist einstückig mit dem Sitzteiler 18a ausgebildet. Grundsätzlich ist es auch denkbar, dass der Anbindungsbock 108a getrennt von den Sitzteilern 18a ausgebildet ist und mittels einer Form-, Kraft- und/oder Kraftschlussverbindung, wie beispielsweise einer Schraubverbindung an den Sitzteiler 18a montiert ist. Das Aktuatorelement 70a ist mit einem ersten Ende an dem Sitzteiler 18a angebunden. Ein zweites Ende des Aktuatorelements 70a ist von einer axial verschiebbaren Betätigungsstange 72a des Aktuatorelements 70a ausgebildet. Die Betätigungsstange 72a ist an den Haltearm 60a des Lagermoduls 50a angebunden. Über den Haltearm 60a wird dadurch eine Betätigungskraft des Aktuatorelements 70a an die verstellbare Teileinheit 42a übertragen. Das Aktuatorelement 70a ist dabei über einen Anbindungspunkt 74a des Haltearms 60a angebunden, der unterhalb der Schwenkachse 106a angeordnet ist, die das Lagermodul 50a zur schwenkbaren Lagerung der verstellbaren Teileinheit 42a ausbildet. Dadurch erzeugt die von dem Aktuatorelement 70a auf den Haltearm 60a wirkende Betätigungskraft ein Moment, das den Haltearm 60a und dadurch die daran befestigte verstellbare Teileinheit 42a nach oben, insbesondere in Richtung ihrer maximalen Gebrauchsstellung, verschwenkt.

Der Betätigungsmechanismus 68a weist ein Bedienelement 76a auf. Mittels des Bedienelements 76a ist die verstellbare Teileinheit 42a durch einen Passagier verstellbar. Das Bedienelement 76a ist als ein Druckknopf ausgebildet und in der Armlehne 22a angeordnet. Das Bedienelement 76a ist dabei auf einer Innenseite der Armlehne 22a angeordnet, wodurch es insbesondere einfach durch einen Passagier bedienbar ist. Grundsätzlich ist es ebenso denkbar, dass das Bedienelement 76a in einem anderen Bereich des Flugzeugsitzes 10a angeordnet ist oder beispielsweise an in einem Flugzeugsitzbereich angeordneten Elementen, wie insbesondere in einer Konsole, angeordnet ist. Grundsätzlich ist es ebenso denkbar, dass das Bedienelement 76a beispielsweise als ein Zugelement ausgebildet ist. Dabei wäre es weiter denkbar, dass das Bedienelement 76a in einem Bereich der verstellbaren Teileinheit 42a, insbesondere in einem Bereich zwischen der verstellbaren Teileinheit 42a und der Haupteinheit 34a des Sitzbodens 30a, angeordnet ist. Dadurch könnte eine vorteilhaft einfache und intuitive Bedienung der verstellbaren Teileinheit 42a erfolgen. Das Bedienelement 76a zur Verstellung der verstellbaren Teileinheit 42a des Sitzbodens 30a ist dabei unmittelbar neben dem Bedienelement 28a zur Verstellung der Rückenlehne 26a angeordnet. Das Bedienelement 76a zur Verstellung der verstellbaren Teileinheit 42a des Sitzbodens 30a ist dabei unmittelbar unterhalb des Bedienelements 28a zur Verstellung der Rückenlehne 26a angeordnet, sodass für den Passagier eine intuitive Bedienung der Rückenlehne 26a und der verstellbaren Teileinheit 42a des Sitzbodens 30a gegeben ist. Das Bedienelement 76a ist über ein nicht näher dargestelltes Koppelelement mit dem Aktuatorelement 70a gekoppelt. Das Koppelelement ist dabei als ein Bowdenzug ausgebildet. Durch Drücken des als Druckknopf ausgebildeten Bedienelements 76a kann ein Passagier das Bedienelement 76a in eine Betätigungsstellung bringen. In der Betätigungsstellung betätigt das Bedienelement 76a das Aktuatorelement 70a. In der betätigten Stellung übt das Aktuatorelement 70a die Betätigungskraft auf die verstellbare Teileinheit 42a aus. Ist die Betätigungskraft, die das Aktuatorelement 70a auf die verstellbare Teileinheit 42a ausübt, größer als eine der Betätigungskraft entgegenwirkende Kraft, die beispielsweise durch eine auf die Teileinheit 42a wirkende Sitzkraft gebildet ist, verstellt das Aktuatorelement 70a die verstellbare Teileinheit 42a in Richtung ihrer maximalen Gebrauchsstellung. Ist das Bedienelement 76a nicht in seiner Betätigungsstellung, ist das Aktuatorelement 70a nicht betätigt und in einer Verriegelstellung. In der Verriegelstellung ist die Betätigungsstange 72a des Aktuatorelements 70a verriegelt und kann nicht axial verschoben werden. Dadurch ist die verstellbare Teileinheit 42a in der Verriegelstellung des Aktuatorelements 70a arretiert. Dadurch ist die verstellbare Teileinheit 42a mittels des Betätigungsmechanismus 68a in jeder Stellung zwischen ihrer Verstaustellung und ihrer maximalen Gebrauchsstellung stufenlos arretierbar.

Der Sitzboden 30a weist einen Schonbezug 82a auf. Der Schonbezug 82a umspannt die Haupteinheit 34a und die verstellbare Teileinheit 42a des Sitzbodens 30a. Der Schonbezug 82a stellt dabei die einzige direkte Verbindung zwischen der Haupteinheit 34a und der verstellbaren Teileinheit 42a dar. Grundsätzlich wäre es auch denkbar, dass die Haupteinheit 34a und die verstellbare Teileinheit 42a jeweils einen eigenen, separaten Schonbezug aufweisen. In der maximalen Gebrauchsstellung ist zwischen der Haupteinheit 34a und der verstellbaren Teileinheit 42a ein Spalt 84a angeordnet. Der Spalt 84a trennt die Haupteinheit 34a und die verstellbare Teileinheit 42a voneinander. Der Schonbezug 82a überspannt den Spalt 84a. Dadurch bildet der Schonbezug 82a eine komfortable Sitzfläche für einen Passagier aus.

Die verstellbare Teileinheit 42a ist über den Betätigungsmechanismus 68a zwischen ihrer Verstaustellung und ihrer maximalen Gebrauchsstellung durch einen Passagier verschwenkbar. Sitzt ein Passagier auf dem Flugzeugsitz 10a und ist die verstellbare Teileinheit 42a in ihrer Verstaustellung, hat der Passagier lediglich den Sitzbereich 40a der Haupteinheit 34a als Sitzbereich 32a des Sitzbodens 30a zum Sitzen zur Verfügung. Durch Betätigen des Bedienelements 76a des Betätigungsmechanismus 68a kann der Passagier die verstellbare Teileinheit 42a in ihre Gebrauchsstellung verschwenken. Dabei darf der Passagier keine Kraft auf die verstellbare Teileinheit 42a ausüben, die größer ist als die Betätigungskraft des Aktuatorelements 70a und dieser entgegenwirkt. Durch Loslassen des Bedienelements 76a kann der Passagier eine Verstellung der verstellbaren Teileinheit 42a in jeder beliebigen Stellung zwischen der Verstaustellung und der Gebrauchsstellung stoppen. Zur Rückführung der verstellbaren Teileinheit 42a von einer Gebrauchsstellung in die Verstaustellung muss der Passagier das Bedienelement 76a betätigen und eine Kraft auf die verstellbare Teileinheit 42a ausüben, die der Betätigungskraft des Aktuatorelements 70a entgegenwirkt, und so die verstellbare Teileinheit 42a zurück in ihre Verstaustellung drücken.

Die Rückenlehne 26a umfasst ein Kissen 78a, das zwischen einer Sitzstellung und einer Komfortstellung zu der Rückenlehne 26a verstellbar ist. Das Kissen 78a ist als ein Stützkissen für einen unteren Rückenbereich ausgebildet. Das Kissen 78a ist vorzugsweise keilförmig ausgebildet. In einer Sitzstellung, in der ein Passagier mit seinem Gesäß auf dem Sitzbereich 32a weit nach vorne gerutscht ist und insbesondere teilweise auf einem von der verstellbaren Teileinheit 42a ausgebildeten Zusatzsitzbereich 44a sitzt, bildet das Kissen 78a eine zu einer von der Rückenlehne 26a ausgebildeten Rückenlehnenfläche abgesetzte Abstützfläche aus. Dadurch kann eine besonders vorteilhafte und komfortable Sitzposition eingenommen werden. Das Kissen 78a ist als ein integriertes Kissen 78a ausgebildet. Das Kissen 78a ist als ein Faltkissen ausgebildet, das mit einem Schonbezug der Rückenlehne 26a verbunden ist. Das Faltkissen ist entlang einer in Querrichtung verlaufenden Verbindungslinie 80a mit der Rückenlehne 26a gekoppelt. Entlang dieser Verbindungslinie 80a ist das Kissen 78a verschwenkbar.

Grundsätzlich wäre es auch denkbar, dass eine Verstellung der verstellbaren Teileinheit 42a dabei an eine Verstellung der Rückenlehne 26a gekoppelt ist. Dabei wäre es denkbar, dass die Verstellung der verstellbaren Teileinheit 42a verhindert ist, wenn die Rückenlehne 26a in einer TTL-Stellung, also einer maximal aufrechten Sitzstellung, ausgerichtet ist. Grundsätzlich wäre es auch denkbar, dass die verstellbare Teileinheit 42a automatisiert in ihre Verstaustellung verfahren wird, sobald die Rückenlehne 26a in eine TTL-Stellung gebracht wird. Grundsätzlich ist es ebenso denkbar, dass die verstellbare Teileinheit 42a automatisch in eine Gebrauchsstellung verfahren wird, wenn die Rückenlehne 26a aus ihrer Sitzstellung in eine Komfortstellung verfahren wird.

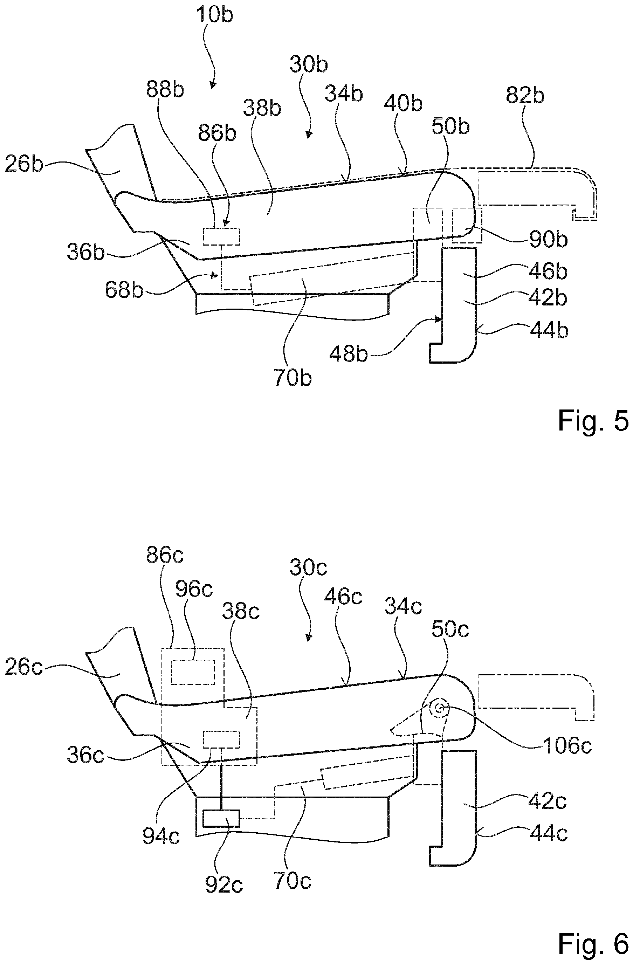

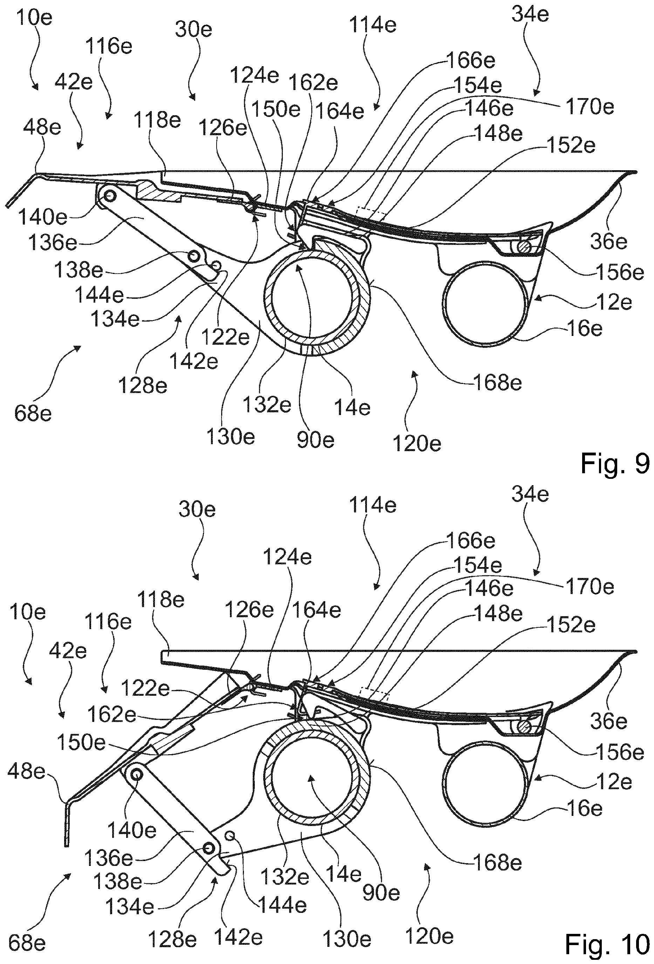

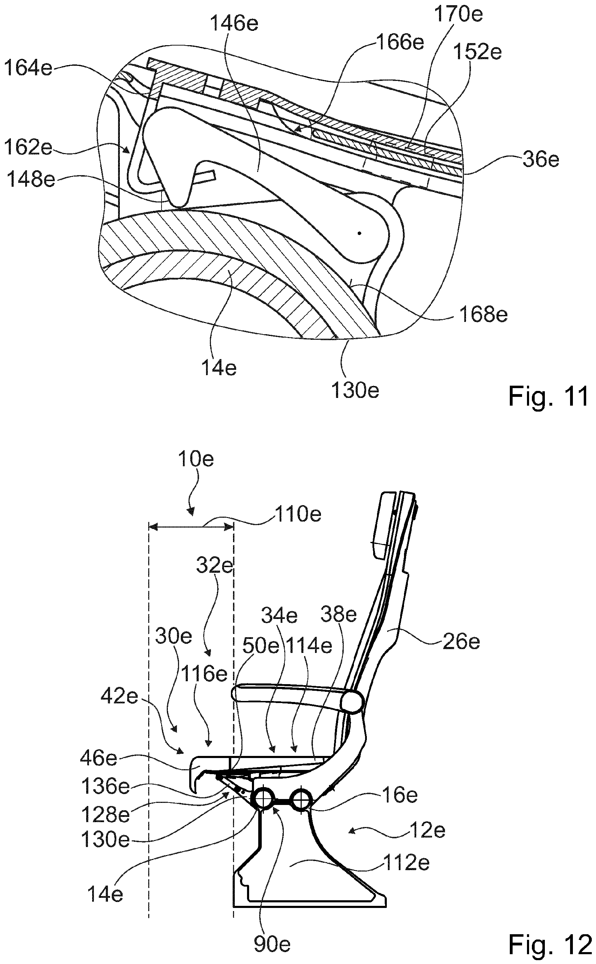

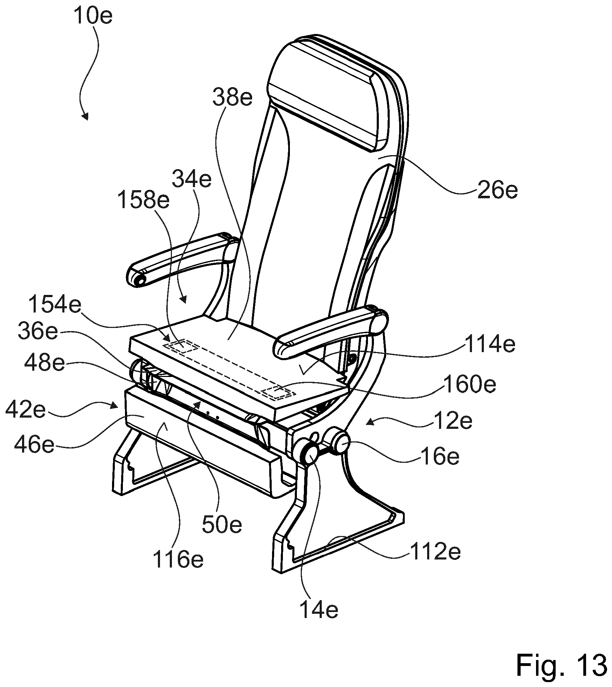

In den Figuren 5 bis 13 sind vier weitere Ausführungsbeispiele gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 bis 4, verwiesen werden kann. Zur Unterscheidung der Ausführungsbeispiele ist der Buchstabe a den Bezugszeichen des Ausführungsbeispiels in Fig. 1 bis 4 nachgestellt. In den Ausführungsbeispielen der Fig. 5 bis 13 ist der Buchstabe a durch die Buchstaben b bis e ersetzt.

Figur 5 zeigt ein zweites Ausführungsbeispiel einer erfindungsgemäßen Flugzeugsitzvorrichtung. Die Flugzeugsitzvorrichtung ist als ein Teil eines Flugzeugsitzes 10b ausgebildet. Die Flugzeugsitzvorrichtung umfasst eine Aufständereinheit 12b, mittels der der Flugzeugsitz 10b auf einem Kabinenboden einer Flugzeugkabine angebracht ist. Die Flugzeugsitzvorrichtung umfasst eine Rückenlehne 26b. Die Rückenlehne 26b ist an einem hinteren Ende des Flugzeugsitzes 10b angeordnet.

Die Flugzeugsitzvorrichtung umfasst einen Sitzboden 30b. Der Sitzboden 30b ist dazu vorgesehen, einen Sitzbereich 32b für einen auf dem Flugzeugsitz 10b sitzenden Passagier auszubilden. Der Sitzboden 30b ist mit der Aufständereinheit 12b gekoppelt. Der Sitzboden 30b weist eine Haupteinheit 34b auf. Die Haupteinheit 34b des Sitzbodens 30b bildet einen Sitzbereich 40b aus. Der Sitzbereich 40b der Haupteinheit 34b ist dabei so groß ausgebildet, dass eine Person komfortabel darauf sitzen kann. Die Haupteinheit 34b des Sitzbodens 30b weist einen Grundkörper 36b auf. Die Haupteinheit 34b weist eine Polstereinheit 38b auf. Die Polstereinheit 38b ist auf dem Grundkörper 36b der Haupteinheit 34b fest angebunden. Die Polstereinheit 38b ist dabei aus einem Schaumstoff gebildet. Die Polstereinheit 38b bildet den Sitzbereich 40b der Haupteinheit 34b aus. Der Sitzboden 30b weist eine Teileinheit 42b auf. Die Teileinheit 42b des Sitzbodens 30b ist als eine verstellbare Teileinheit 42b ausgebildet. Die verstellbare Teileinheit 42b ist zwischen einer Verstaustellung und einer Gebrauchsstellung zu der Aufständereinheit 12b verstellbar. Die verstellbare Teileinheit 42b ist dazu vorgesehen, einen Sitzbereich 32b des Sitzbodens 30b in einer Stellung zu vergrößern. Die verstellbare Teileinheit 42b ist dazu vorgesehen, zur Vergrößerung des Sitzbereichs 32b des Sitzbodens 30b den Sitzbereich 40b der Haupteinheit 34b des Sitzbodens 30b zu erweitern. Die verstellbare Teileinheit 42b ist getrennt von der Haupteinheit 34b ausgebildet. Der Sitzboden 30b weist einen Schonbezug 82b auf. Der Schonbezug 82b umspannt die Haupteinheit 34a und die verstellbare Teileinheit 42b des Sitzbodens 30a. Der Schonbezug 82b stellt dabei die einzige direkte Verbindung zwischen der Haupteinheit 34b und der verstellbaren Teileinheit 42b dar.

Die verstellbare Teileinheit 42b ist relativ zu der Aufständereinheit 12b verschwenkbar angeordnet. Die verstellbare Teileinheit 42b ist an der Aufständereinheit 12b angelenkt. Zur Anbindung der verstellbaren Teileinheit 42b an die Aufständereinheit 12b weist die Flugzeugsitzvorrichtung ein Lagermodul 50b auf. Mittels des Lagermoduls 50b ist die verstellbare Teileinheit 42b zwischen ihrer Verstaustellung und ihrer Gebrauchsstellung verschwenkbar. Das Lagermodul 50b ist in der Figur 5 nicht näher dargestellt, lediglich angedeutet. Das Lagermodul 50b ist im Wesentlichen gleich ausgebildet wie das Lagermodul des ersten Ausführungsbeispiels und soll deshalb hier auch nicht näher beschrieben werden.

Die Flugzeugsitzvorrichtung umfasst einen Betätigungsmechanismus 68b. Der Betätigungsmechanismus 68b ist dazu vorgesehen, die verstellbare Teileinheit 42b zwischen ihrer Verstaustellung und der maximalen Gebrauchsstellung zu verstellen. Der Betätigungsmechanismus 68b ist dazu vorgesehen, die verstellbare Teileinheit 42b zu betätigen. Der Betätigungsmechanismus 68b umfasst ein Aktuatorelement 70b. Das Aktuatorelement 70b ist als ein Federelement ausgebildet. Das Aktuatorelement 70b ist als eine Gasdruckfeder ausgebildet. Über das Aktuatorelement 70b ist der Betätigungsmechanismus 68b dazu vorgesehen, die verstellbare Teileinheit 42b zu verschwenken. Das Aktuatorelement 70b und eine Anbindung an das Lagermodul 50b sind dabei in der Figur 5 lediglich stark abstrahiert dargestellt, da diese im Wesentlichen einer Ausgestaltung aus dem ersten Ausführungsbeispiel entsprechen.

Der Betätigungsmechanismus 68b ist dazu vorgesehen, die verstellbare Teileinheit 42b automatisch von ihrer Verstaustellung in ihre Gebrauchsstellung zu verschwenken, wenn eine Person auf dem von der Haupteinheit 34b ausgebildeten Sitzbereich 40b Platz nimmt. Die verstellbare Teileinheit 42b ist dazu vorgesehen, automatisch in die Gebrauchsstellung geschwenkt und dort gehalten zu werden, während ein Passagier auf dem Flugzeugsitz 10b sitzt. Der Betätigungsmechanismus 68b verstellt die verstellbare Teileinheit 42b selbsttätig in die maximale Gebrauchsstellung, wenn ein Passagier auf dem Sitzboden 30b sitzt. Der Betätigungsmechanismus 68b ist dazu vorgesehen, die verstellbare Teileinheit 42b selbsttätig wieder in ihre Verstaustellung zu verschwenken, wenn ein Passagier nicht mehr auf dem Sitzboden 30b sitzt. Der Betätigungsmechanismus 68b verschwenkt die verstellbare Teileinheit 42b, sobald ein Passagier von dem Flugzeugsitz 10b aufsteht, selbsttätig zurück in die Verstaustellung. Dadurch kann der Sitzbereich 32b des Sitzbodens 30b vorteilhaft immer automatisch vergrößert werden, wenn ein Passagier auf dem Flugzeugsitz 10b sitzt. Dadurch kann die Haupteinheit 34b des Sitzbodens 30b vorteilhaft kürzer ausgebildet werden, als es für eine optimal komfortable Größe eines Sitzbereichs notwendig wäre, da sich der Sitzbereich automatisch vergrößert, sobald ein Passagier auf dem Flugzeugsitz 10b Platz nimmt. Dadurch ist die im Vergleich zum Stand der Technik kürzere Haupteinheit 34b des Sitzbodens 30b hinsichtlich eines Sitzkomforts nicht nachteilig. Vorteilhaft ist aber eine Platzersparnis, die vor dem Flugzeugsitz 10b erzeugt wird, indem die verstellbare Teileinheit 42b in einem unbenutzten Zustand der Flugzeugsitzes 10b in ihrer Verstaustellung weggeklappt ist. Dadurch kann ein Durchgangsweg vor dem Flugzeugsitz 10b vorteilhaft vergrößert werden, ohne einen Abstand zwischen hintereinander angeordneten Flugzeugsitzen 10b zu erhöhen. Dadurch können insbesondere in Flugzeugsitzreihen, die zu einem Notausgang eines Flugzeugs führen, vorteilhaft breite Fluchtwege bereitgestellt werden.

Der Betätigungsmechanismus 68b umfasst eine Sensorvorrichtung 86b. Die Sensorvorrichtung 86b ist dazu vorgesehen, zur Verstellung der verstellbaren Teileinheit 42b ein Sensorsignal zu erfassen. Die Sensorvorrichtung 86b ist dazu vorgesehen, zur Auslösung der Verstellung der verstellbaren Teileinheit 42b eine auf den Sitzboden 30b wirkende Sitzkraft zu erfassen. Die Sensorvorrichtung 86b umfasst einen Drucksensor 88b. Der Drucksensor 88b ist als ein Druckschalter ausgebildet. Die Sensorvorrichtung 86b ist in einem hinteren Bereich der Haupteinheit 34b des Sitzbodens 30b angeordnet. Der Drucksensor 88b ist unterhalb einer Polstereinheit 38b der Haupteinheit 34b angeordnet. Der Drucksensor 88b erfasst eine auf den Sitzboden 30b, insbesondere eine auf die Haupteinheit 34b des Sitzbodens 30b wirkende Sitzkraft. Ab einem definierten Grenzwert der auf den Sitzboden 30b wirkenden Sitzkraft schaltet der Drucksensor 88b in eine Betätigungsstellung. Der Drucksensor 88b ist mit dem Aktuatorelement 70b gekoppelt. Ist der Drucksensor 88b in eine Betätigungsstellung gebracht, betätigt der Drucksensor 88b das Aktuatorelement 70b. In der Betätigungsstellung betätigt der Drucksensor 88b das Aktuatorelement 70b. In der betätigten Stellung übt das Aktuatorelement 70b eine Betätigungskraft auf die verstellbare Teileinheit 42b aus. Der Drucksensor 88b bleibt dabei so lange in seiner Betätigungsstellung, wie ein Passagier auf dem Sitzboden 30b sitzt.

Der Betätigungsmechanismus 68b umfasst eine Verriegelungseinheit 90b, die die verstellbare Teileinheit 42b in ihrer maximalen Gebrauchsstellung verriegelt. Die Verriegelungseinheit 90b weist dazu ein nicht näher dargestelltes Verriegelungselement auf, das in einem Betriebszustand, in dem ein Passagier auf dem Sitzboden 30b sitzt und eine Sitzkraft darauf ausübt, freigegeben ist. Ist das Verriegelungselement freigegeben, verriegelt das Verriegelungselement der Verriegelungseinheit 90b die verstellbare Teileinheit 42b, sobald diese in ihrer maximalen Gebrauchsstellung angeordnet ist. Sobald der Passagier von dem Sitzboden 30b aufsteht und keine Sitzkraft mehr auf den Sitzboden 30b wirkt, wird das Verriegelungselement der Verriegelungseinheit 90b in einer Entriegelstellung verriegelt und gibt die verstellbare Teileinheit 42b frei und entriegelt diese dadurch. Die verstellbare Teileinheit 42b wird automatisiert aus der Gebrauchsstellung zurück in ihre Verstaustellung gebracht.

Figur 6 zeigt ein drittes Ausführungsbeispiel einer Flugzeugsitzvorrichtung. Die Flugzeugsitzvorrichtung ist als ein Teil eines Flugzeugsitzes 10c ausgebildet. Die Flugzeugsitzvorrichtung umfasst eine Aufständereinheit 12c, mittels der der Flugzeugsitz 10c auf einem Kabinenboden einer Flugzeugkabine angebracht ist. Die Flugzeugsitzvorrichtung umfasst eine Rückenlehne 26c. Die Rückenlehne 26c ist an einem hinteren Ende des Flugzeugsitzes 10c angeordnet.

Die Flugzeugsitzvorrichtung umfasst einen Sitzboden 30c. Der Sitzboden 30c ist dazu vorgesehen, einen Sitzbereich 32c für einen auf dem Flugzeugsitz 10c sitzenden Passagier auszubilden. Der Sitzboden 30c ist mit der Aufständereinheit 12c gekoppelt. Der Sitzboden 30c weist eine Haupteinheit 34c auf. Die Haupteinheit 34c des Sitzbodens 30c bildet einen Sitzbereich 40c aus. Der Sitzbereich 40c der Haupteinheit 34c ist dabei so groß ausgebildet, dass eine Person komfortabel darauf sitzen kann. Die Haupteinheit 34c des Sitzbodens 30c weist einen Grundkörper 36c auf. Die Haupteinheit 34c weist eine Polstereinheit 38c auf. Die Polstereinheit 38c ist auf dem Grundkörper 36c der Haupteinheit 34c fest angebunden. Die Polstereinheit 38c ist dabei aus einem Schaumstoff gebildet. Die Polstereinheit 38c bildet den Sitzbereich 40c der Haupteinheit 34c aus. Der Sitzboden 30c weist eine Teileinheit 42c auf. Die Teileinheit 42c des Sitzbodens 30c ist als eine verstellbare Teileinheit 42c ausgebildet. Die verstellbare Teileinheit 42c ist zwischen einer Verstaustellung und einer Gebrauchsstellung zu der Aufständereinheit 12c verstellbar. Die verstellbare Teileinheit 42c ist dazu vorgesehen, einen Sitzbereich 32c des Sitzbodens 30c in einer Stellung zu vergrößern. Die verstellbare Teileinheit 42c ist dazu vorgesehen, zur Vergrößerung des Sitzbereichs 32c des Sitzbodens 30c den Sitzbereich 40c der Haupteinheit 34c des Sitzbodens 30c zu erweitern. Die verstellbare Teileinheit 42c ist getrennt von der Haupteinheit 34c ausgebildet.

Die verstellbare Teileinheit 42c ist relativ zu der Aufständereinheit 12c verschwenkbar angeordnet. Die verstellbare Teileinheit 42c ist an der Aufständereinheit 12c angelenkt. Zur Anbindung der verstellbaren Teileinheit 42c an die Aufständereinheit 12c weist die Flugzeugsitzvorrichtung ein Lagermodul 50c auf. Mittels des Lagermoduls 50c ist die verstellbare Teileinheit 42c zwischen ihrer Verstaustellung und ihrer Gebrauchsstellung um eine Schwenkachse 106c verschwenkbar. Das Lagermodul 50c ist in der Figur 6 nicht näher dargestellt, lediglich angedeutet. Das Lagermodul 50c ist im Wesentlichen gleich ausgebildet wie das Lagermodul des ersten Ausführungsbeispiels und soll deshalb hier auch nicht näher beschrieben werden.

Die Flugzeugsitzvorrichtung umfasst einen Betätigungsmechanismus 68c. Der Betätigungsmechanismus 68c ist dazu vorgesehen, die verstellbare Teileinheit 42c zwischen ihrer Verstaustellung und der maximalen Gebrauchsstellung zu verstellen. Der Betätigungsmechanismus 68c ist dazu vorgesehen, die verstellbare Teileinheit 42c zu betätigen. Der Betätigungsmechanismus 68c umfasst ein Aktuatorelement 70c. Das Aktuatorelement 70c ist als ein elektrischer Stellmotor ausgebildet. Der Betätigungsmechanismus 68c umfasst ein Steuergerät 92c, das das als elektrischer Stellmotor ausgebildete Aktuatorelement 70c ansteuert. Durch Betätigung des als elektrischer Stellmotor ausgebildeten Aktuatorelements 70c mittels des Steuergeräts 92c kann die verstellbare Teileinheit 42c stufenlos zwischen ihrer Verstaustellung und der maximalen Gebrauchsstellung verstellt werden.

Der Betätigungsmechanismus 68c umfasst eine Sensorvorrichtung 86c. Die Sensorvorrichtung 86c ist dazu vorgesehen, zur Verstellung der verstellbaren Teileinheit 42c ein Sensorsignal zu erfassen. Die Sensorvorrichtung 86c ist dazu vorgesehen, zur Auslösung der Verstellung der verstellbaren Teileinheit 42c eine auf den Sitzboden 30c wirkende Sitzkraft zu erfassen. Die Sensorvorrichtung 86c weist einen Drucksensor 94c auf. Der Drucksensor 94c ist als ein elektronischer Drucksensor ausgebildet, der ein elektronisches Sensorsignal ausgibt. Der Drucksensor 94c ist mit dem Steuergerät 92c gekoppelt. Das Sensorsignal des Drucksensors 94c wird von dem Steuergerät 92c ausgewertet. Die Sensorvorrichtung 86c weist ein weiteres Sensorelement 96c auf. Das weitere Sensorelement 96c ist als ein Eingabegerät ausgebildet. Über das als Eingabegerät ausgebildete Sensorelement 96c können Kenngrößen, wie insbesondere eine Größe, eine Länge eines Oberschenkels oder andere körperspezifische Kenngrößen eines Passagiers, eingegeben werden. Die eingegebenen Kenngrößen werden in Form eines Sensorsignals an das Steuergerät 92c übermittelt und von diesem ausgewertet. Grundsätzlich ist es auch denkbar, dass die Sensorvorrichtung 86c weitere Sensorelemente, wie beispielsweise eine Kamera, umfasst, die dem Steuergerät 92c weitere Sensorsignale übermitteln.

Anhand der von der Sensorvorrichtung 86c übermittelten und von dem Steuergerät 92c ausgewerteten Sensorsignale steuert das Steuergerät 92c das Aktuatorelement 70c entsprechend an. Dabei stellt das Steuergerät 92c mittels des Aktuatorelements 70c die verstellbare Teileinheit 42c entsprechend so ein, dass für den auf dem Flugzeugsitz 10c sitzenden Passagier ein optimal großer Sitzbereich 32c des Sitzbodens 30c bereitgestellt wird. Das Steuergerät 92c verstellt die verstellbare Teileinheit 42c dabei aus der Verstaustellung in die Gebrauchsstellung, sobald das Steuergerät 92c mittels des Sensorsignals des Drucksensors 94c erkennt, dass ein Passagier auf dem Sitzboden 30c sitzt. Sobald das Steuergerät 92c mittels des Sensorsignals des Drucksensors 94c erkennt, dass ein Passagier von dem Sitzboden 30c aufgestanden ist, verstellt das Steuergerät 92c die verstellbare Teileinheit 42c von der Gebrauchsstellung zurück in die Verstaustellung.

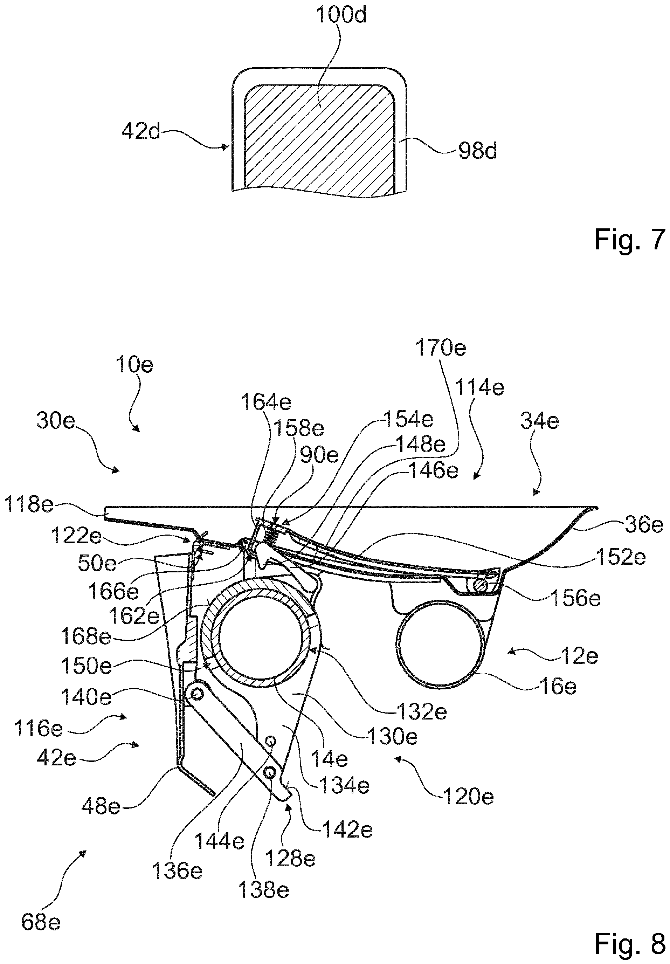

Figur 7 zeigt eine verstellbare Teileinheit 42d eines Sitzbodens 30d einer Flugzeugsitzvorrichtung in einem vierten Ausführungsbeispiel. Die verstellbare Teileinheit 42d ist im Unterschied zu den anderen Ausführungsbeispielen von einer Bespannung gebildet. Die verstellbare Teileinheit 42d weist dazu einen bespannten Rahmen 98d auf. Der Rahmen 98d ist im Wesentlichen U-förmig ausgebildet. Die verstellbare Teileinheit 42d weist ein Gewebe 100d auf, das in dem Rahmen 98d aufgespannt ist. Auf dem Gewebe 100d ist in einem montierten Zustand eine hier nicht näher dargestellte Polstereinheit angebracht, die einen von der verstellbaren Teileinheit 42d ausgebildeten Zusatzsitzbereich ausbildet.

Die Figuren 8 bis 13 zeigen ein fünftes Ausführungsbeispiel einer erfindungsgemäßen Flugzeugsitzvorrichtung. Die Flugzeugsitzvorrichtung ist als ein Teil eines Flugzeugsitzes 10e ausgebildet. Der Flugzeugsitz 10e ist dabei vorzugsweise als Teil einer nicht näher dargestellten Sitzreihe ausgebildet. Der Flugzeugsitz 10e ist in einem Bereich Flugzeugkabine angeordnet, in dem ein Notausgang des Flugzeugs angeordnet ist. Ein Bereich vor dem Flugzeugsitz 10e ist als ein Fluchtweg 110e ausgebildet. Der Fluchtweg 110e, der zu dem in einer Seitenwand des Flugzeugs angeordneten Notausgang führt, ist in Flugrichtung betrachtet hinter dem Flugzeugsitz 10e angeordnet. Der Fluchtweg ist 110e vor dem Flugzeugsitz 10e angeordnet. Der Fluchtweg 110e weist dabei eine Breite auf, die von einer Rückenlehne eines nicht näher dargestellten, vor dem Flugzeugsitz 10e angeordneten Flugzeugsitzes, bis an eine vordere Kante des Flugzeugsitzes 10e reicht. Der Flugzeugsitz 10e ist als ein Overwing-Exit Flugzeugsitz ausgebildet. Insbesondere ist der Flugzeugsitz 10e in einem Bereich der Flügel des Flugzeugs in der Flugzeugskabine angeordnet.

Die Flugzeugsitzvorrichtung umfasst eine Aufständereinheit 12e, mittels der der Flugzeugsitz 10e auf einem Kabinenboden einer Flugzeugkabine angebracht ist. Mittels der Aufständereinheit 12e ist der Flugzeugsitz 10e auf einer Aufständerebene aufständerbar. Der Kabinenboden bildet die Aufständerebene aus. Die Aufständereinheit 12e weist Sitzfüße 112e auf, die zur Montage in der Flugzeugkabine über Verbindungselemente mit Führungsschienen in dem Kabinenboden fest verbunden sind. Dabei sind ein vorderer und ein hinterer Sitzfuß 112e jeweils einstückig miteinander ausgebildet. Grundsätzlich ist es auch denkbar, dass die vorderen und hinteren Sitzfüße getrennt, jeweils als einzelne Sitzfüße ausgebildet sind. Die Aufständereinheit 12e weist ein Querträgermodul 120e auf. Das Querträgermodul 120e weist in Sitzrichtung des Flugzeugsitzes 10e eine Erstreckung von 150 mm auf. Das Querträgermodul weist zwei Querträger 14e, 16e auf. Die Querträger 14e, 16e sind als Tragrohre ausgebildet. Die Querträger 14e, 16e sind Teil der Aufständereinheit 12e und verlaufen in Querrichtung des Flugzeugsitzes 10e. Die Querträger 14e, 16e sind über die Sitzfüße 112e mit der Aufständereinheit 12e gekoppelt. Die Sitzfüße 112e bilden je Querträger 14e, 16e jeweils eine Aufnahme aus, über die die Querträger 14e, 16e fest mit den Sitzfüßen 112e gekoppelt sind. Die Querträger 14e, 16e weisen in Sitzrichtung einen Abstand von 50 mm auf. Die Flugzeugsitzvorrichtung umfasst eine Rückenlehne 26e. Die Rückenlehne 26e ist an einem hinteren Ende des Flugzeugsitzes 10e angeordnet. Die Rückenlehne 26e ist mit der Aufständereinheit 12e gekoppelt. Die Rückenlehne 26e ist verschwenkbar mit der Aufständereinheit 12e gekoppelt.

Die Flugzeugsitzvorrichtung umfasst einen Sitzboden 30e. Der Sitzboden 30e ist dazu vorgesehen, einen Sitzbereich 32e für einen auf dem Flugzeugsitz 10e sitzenden Passagier auszubilden. Der Sitzboden 30e ist mit der Aufständereinheit 12e gekoppelt. Der Sitzboden 30e weist eine Haupteinheit 34e auf. Die Haupteinheit 34e des Sitzbodens 30e bildet einen Teilsitzbereich 114e aus. Der Teilsitzbereich 114e, den die Haupteinheit 34e des Sitzbodens 30e ausbildet ist kleiner als ein aus dem Stand der Technik bekannter Sitzbereich eines Sitzbodens. Der Teilsitzbereich 114e, den die Haupteinheit 34e des Sitzbodens 30e ausbildet, bildet einen hinteren Teil der Sitzbereichs 32e des Sitzbodens 30e aus. Der Teilsitzbereich 114e der Haupteinheit 34e weist eine Erstreckung in Sitzrichtung des Flugzeugsitzes 10e von 270 mm auf. Die Haupteinheit 34e erstreckt sich insbesondere nicht in einen Bereich des Fluchtwegs 110e hinein. Die Haupteinheit 34e weist eine vordere Kante 118e auf, die nicht in den Fluchtweg hineinragt. Dabei ragt die vordere Kante 118e der Haupteinheit 34e in keiner Stellung der Haupteinheit 34e in den Fluchtweg 110e hinein.

Die Haupteinheit 34e des Sitzbodens 30e weist einen Grundkörper 36e auf. Der Grundkörper 36e ist als eine Sitzschale ausgebildet. Der Grundkörper 36e ist mit der Aufständereinheit 12e gekoppelt. Zur Kopplung mit der Aufständereinheit 12e weist der Grundkörper 36e zwei Aufnahmebereiche für die Querträger 14e, 16e auf. Der Grundkörper 36e ist beweglich mit der Aufständereinheit 12e verbunden. Die Haupteinheit 34e weist eine Polstereinheit 38e auf. Die Polstereinheit 38e ist auf dem Grundkörper 36e der Haupteinheit 34e fest angebunden. Die Polstereinheit 38e ist dabei aus einem Schaumstoff und einem Bezug gebildet. Die Polstereinheit 38e bildet den Sitzbereich 40e der Haupteinheit 34e aus.

Der Sitzboden 30e weist eine Teileinheit 42e auf. Die Teileinheit 42e des Sitzbodens 30e ist als eine verstellbare Teileinheit 42e ausgebildet. Die verstellbare Teileinheit 42e ist zwischen einer Verstaustellung und einer Gebrauchsstellung zu der Aufständereinheit 12e verstellbar. Die verstellbare Teileinheit 42e ist dazu vorgesehen, zusammen mit der Haupteinheit 34e den Sitzbereich 32e des Sitzbodens 30e in der Gebrauchsstellung auszubilden. Die verstellbare Teileinheit 42e bildet einen Teilsitzbereich 116e aus. Der Teilsitzbereich 116e der verstellbaren Teileinheit 42e bildet in der Gebrauchsstellung der verstellbaren Teileinheit 42e zusammen mit dem Teilsitzbereich 114e der Haupteinheit 34e den Sitzbereich 32e des Sitzbodens 30e aus. Der Teilsitzbereich 114e der Haupteinheit 34e und der Teilsitzbereich 116e der verstellbaren Teileinheit 42e weisen in Querrichtung des Flugzeugsitzes 10e eine im Wesentlichen gleiche Erstreckung (Breite) auf. Die verstellbare Teileinheit 24e weist in Sitzrichtung des Flugzugsitzes 10e gemessen eine Erstreckung von 100 mm auf. Grundsätzlich ist auch denkbar, dass die verstellbare Teileinheit 24e in Sitzrichtung des Flugzugsitzes 10e gemessen eine Erstreckung aufweist, die in einem Bereich von 90 mm bis 120 mm liegt. Die verstellbare Teileinheit 42e ist in der Gebrauchsstellung im Wesentlichen horizontal ausgerichtet. In der Gebrauchsstellung ist die verstellbare Teileinheit 42e im Wesentlichen auf einer gleichen Höhe angeordnet wie der Teilsitzbereich 114e der Haupteinheit 34e. In der Gebrauchsstellung bildet der Teilsitzbereich 116e der verstellbaren Teileinheit 42e zusammen mit dem Teilsitzbereich 114e der Haupteinheit 34e den gesamten Sitzbereich 32e des Sitzbodens 30e aus.

Die verstellbare Teileinheit 42e umfasst eine Polstereinheit 46e, die den Teilsitzbereich 116e ausbildet. Die Polstereinheit 46e ist dabei aus einem Schaumstoff und einem Bezug gebildet. Die verstellbare Teileinheit 42e umfasst einen Grundkörper 48e. Der Grundkörper 48e ist von einem Trägerelement gebildet. Der Grundkörper 48e ist von einer Hartschalte gebildet. Der Grundkörper 48e der verstellbaren Teileinheit 42e ist aus einem Faserverbundwerkstoff gebildet. Grundsätzlich ist es auch denkbar, dass der Grundkörper aus einem anderen, dem Fachmann als sinnvoll erscheinenden Material gebildet ist, wie insbesondere aus einem Blech oder einem Hybridmaterial. Die Polstereinheit 46e der verstellbaren Teileinheit 42e ist an den Grundkörper 48e angebunden.

Die verstellbare Teileinheit 42e ist getrennt von der Haupteinheit 34e ausgebildet. Die verstellbare Teileinheit 42e ist relativ zu der Aufständereinheit 12e verschwenkbar angeordnet. Die verstellbare Teileinheit 42e ist schwenkbar zu der Haupteinheit 34e des Sitzbodens 30e gelagert. Die verstellbare Teileinheit 42e ist dabei direkt schwenkbar an die Haupteinheit 34e gekoppelt. Zur Anbindung der verstellbaren Teileinheit 42e an die Haupteinheit 34e weist die Flugzeugsitzvorrichtung ein Lagermodul 50e auf. Über das Lagermodul 50e ist die verstellbare Teileinheit 42e des Sitzbodens 30a verschwenkbar zu der Haupteinheit 34e des Sitzbodens 30e und dadurch auch verschwenkbar zu der Aufständereinheit 12e gelagert. Über das Lagermodul 50e ist die verstellbare Teileinheit 42e des Sitzbodens 30e zwischen ihrer Verstaustellung und ihrer Gebrauchsstellung verschwenkbar. Das Lagermodul 50e umfasst ein Scharnier 122e. Das Scharnier 122e umfasst ein erstes Anbindungselement 124e und ein zu dem ersten Anbindungselement 124e um eine Schwenkachse drehbares zweites Anbindungselement 126e. Um die Schwenkachse sind die beiden Anbindungselemente 124e, 126e zueinander verschwenkbar. Das erste Anbindungselement 124e ist fest und starr mit dem Grundkörper 36e der Haupteinheit 34e verbunden. Das zweite Anbindungselement 126e ist fest und starr mit dem Grundkörper 48e der verstellbaren Teileinheit 42e verbunden. Dabei sind die Anbindungselemente 124e, 126e jeweils mittels einer geeigneten form- und/oder stoffschlüssigen Verbindungsmethode mit dem jeweiligen Grundkörper 36e, 42e verbunden. Die Anbindungselemente 124e, 126e sind jeweils an einer Unterseite des entsprechenden Grundkörpers 36e, 42e angebunden. Die Schwenkachse, die von dem Scharnier 122e ausgebildet wird, verläuft orthogonal zu der Sitzrichtung des Flugzeugsitzes 10e.

Die Flugzeugsitzvorrichtung umfasst einen Betätigungsmechanismus 68e. Der Betätigungsmechanismus 68e ist dazu vorgesehen, die verstellbare Teileinheit 42e zwischen ihrer Verstaustellung und ihrer Gebrauchsstellung zu verstellen. Der Betätigungsmechanismus ist einstückig mit dem Lagermodul 50e ausgebildet. Der Betätigungsmechanismus 68e ist zu einer händischen Verstellung der verstellbaren Teileinheit 42e vorgesehen. Der Betätigungsmechanismus 68e ist frei von Federelementen, die eine Verschwenkbewegung der verstellbaren Teileinheit 42e zwischen ihrer Verstaustellung und ihrer Gebrauchsstellung unterstützen. Zur Verstellung der verstellbaren Teileinheit 42e von ihrer Verstaustellung in ihre Gebrauchsstellung muss ein Passagier eine Kraft auf die verstellbare Teileinheit 42e ausüben um diesen um die Schwenkachse des Scharniers 122e zu verschwenken. Dabei ist die verstellbare Teileinheit 42e dazu vorgesehen von einem Passagier zur Verstellung von der Verstaustellung in die Gebrauchsstellung, beispielsweise händisch erfasst und so in die Gebrauchsstellung gezogen. Der Betätigungsmechanismus 68e ist dazu vorgesehen, dass die verschwenkbare Teileinheit 42e selbsttätig von einer Gebrauchsstellung in die Verstaustellung verschwenkt werden kann. Zur Verstellung der verstellbaren Teileinheit 42e ist insbesondere keine zusätzliche Kraft von einem Passagier auf die verstellbare Teileinheit 42e nötig um diese von der Gebrauchsstellung in die Verstaustellung zu verschwenken. Die verstellbare Teileinheit 42e ist insbesondere dazu vorgesehen, allein durch die Schwerkraft wieder von der Gebrauchsstellung in die Verstaustellung bewegt zu werden. Grundsätzlich wäre es auch denkbar, dass die Flugzeugsitzvorrichtung ein Federelement umfasst, mittels dem eine Bewegung der verstellbaren Teileinheit 42e von der Gebrauchsstellung in die Verstaustellung zumindest in einem Teilbereich die Bewegung unterstützt.

Zur Verriegelung der verstellbaren Teileinheit 42e in der Gebrauchsstellung weist die Flugzeugsitzvorrichtung eine Verriegelungseinheit 90e auf. Die Verriegelungseinheit 90e ist dazu vorgesehen, die verstellbare Teileinheit 42e in der Gebrauchsstellung mechanisch zu verriegeln. Die Verriegelungseinheit 90e ist dazu vorgesehen, die verstellbare Teileinheit 42e lediglich in einem Zustand, in dem ein Passagier auf dem Flugzeugsitz 10e sitzt in der Gebrauchsstellung zu verriegeln. Die Verriegelungseinheit 90e weist einen Verriegelungszustand und einen Freigabezustand auf. Die Verriegelungseinheit 90e nimmt den Verriegelungszustand ein, wenn ein Passagier auf dem Flugzeugsitz 10e sitzt. Die Verriegelungseinheit 90e nimmt den Verriegelungszustand ein, wenn auf den Sitzboden 30e, insbesondere auf die Haupteinheit 34e, eine Sitzkraft wirkt.. Dabei ist eine Sitzkraft als eine Kraft, die orthogonal auf den Sitzbereich 32e in Richtung der Aufständereinheit 12e auf den Sitzboden 30e wirkt. Die Sitzkraft ist vorzugsweise von einem auf dem Sitzboden 30e des Flugzeugsitzes 10e sitzenden Passagier gebildet.

Die Verriegelungseinheit 90e umfasst ein Abstützmodul 128e. Das Abstützmodul 128e ist dazu vorgesehen, in der Gebrauchsstellung der verstellbaren Teileinheit 42e eine Kraft von der verstellbaren Teileinheit 42e in die Aufständereinheit 12e, insbesondere den vorderen Querträger 14e einzuleiten. Das Abstützmodul 128e ist dazu vorgesehen, die verstellbare Teileinheit 42e in einer Verriegelstellung in ihrer Gebrauchsstellung zu halten. Über das Abstützmodul 128e wird in einem Zustand in dem ein Passagier auf dem Flugzeugsitz 10e sitzt ein Teil einer Sitzkraft, der auf die verstellbare Teileinheit 42e wirkt in die Aufständereinheit 12e abgeleitet. Das Abstützmodul 128e weist ein erstes Trägerelement 130e auf, das an die Ausständereinheit 12e angebunden ist. Das erste Trägerelement 130e ist beweglich mit der Aufständereinheit 12e verbunden. Das erste Trägerelement 130e ist verschwenkbar mit dem vorderen Querträger 14e verbunden. Das erste Trägerelement 130e weist einen Aufnahmebereich 132e auf, mittels dem das erste Trägerelement 130e den vorderen Querträger 14e umschließt. Über den Aufnahmebereich 132e ist das erste Trägerelement 130e über eine Gleitlagerverbindung drehbar zu dem vorderen Querträger 14e gelagert. Grundsätzlich ist es auch denkbar, dass das erste Trägerelement 130e über eine andere Lagerung, beispielsweise über eine Halbschale, ein Viergelenk, oder eine andere, dem Fachmann als sinnvoll erscheinende Weise an den vorderen Querträger beweglich angebunden ist. Das erste Trägerelement 130e weist zwei sich von dem Aufnahmebereich 132e weg erstreckende Stege 134e auf. Die Stege 134e sind in einer Querrichtung beabstandet zueinander angeordnet. Die Stege 134e erstrecken sich von dem Aufnahmebereich 132e in einer Radialrichtung weg. Eine Form der Stege 134e ist dabei gleich. Das Abstützmodul 128e weist ein zweites Trägerelement 136e auf. Grundsätzlich ist es auch denkbar, dass das Abstützmodul 128e weitere Trägerelemente aufweist, die mit wenigstens einem der Trägerelemente 130e, 136e schwenkbar gekoppelt sind. Das zweite Trägerelement 136e ist mit einem ersten Ende mit dem ersten Trägerelement 130e des Abstützmoduls 128e verbunden. Das zweite Trägerelement 136e ist schwenkbar mit dem ersten Trägerelement 130e verbunden. Zur schwenkbaren Kopplung des zweiten Trägerelements 136e mit dem ersten Trägerelement 130e weist das Abstützmodul 128e einen Bolzen 138e auf, der zwischen den Stegen 134e des ersten Trägerelements 130e angeordnet ist. Das zweite Trägerelement 136e ist mit einem zweiten Ende mit der verstellbaren Teileinheit 42e verbunden. Das zweite Trägerelement 136e ist verschwenkbar mit der verstellbaren Teileinheit 42e verbunden. Das zweite Trägerelement 136e ist an einer Unterseite der verstellbaren Teileinheit 42e angebunden. Das zweite Trägerelement 136e ist mit seinem zweiten Ende über einen Lagerbolzen 140e mit der verstellbaren Teileinheit 42e verbunden. Das Abstützmodul 128e weist einen Anschlag 142e auf, der eine Verdrehung der zwei Trägerelemente 130e, 136e zueinander begrenzt. Dazu bildet das zweite Trägerelement 136e an seinem ersten Ende einen Teil des Anschlags 142e aus. Das erste Trägerelement 130e weist einen Anschlagsbolzen 144e auf, der zwischen den Stegen 134e des ersten Trägerelements 130e angeordnet ist. Zur Begrenzung einer Verschwenkung des zweiten Trägerelements 136e zu dem ersten Trägerelement 130e schlägt der Anschlag 142e an dem Anschlagsbolzen 144e an. In der Verriegelstellung des Abstützmoduls 128e, also in der Gebrauchsstellung der verstellbaren Teileinheit 42e schlägt der Anschlag 142e an dem Anschlagsbolzen 144e an. Dadurch kann die verstellbare Teileinheit 42e aus der Verstaustellung heraus maximal bis in die Gebrauchsstellung verschwenkt werden. Eine weitere Verschwenkung aus der Verstaustellung nach oben über die Gebrauchsstellung hinaus, ist durch den Anschlag 142e verhindert.

Die Verriegelungseinheit 90e umfasst zur Verriegelung der verstellbaren Teileinheit 42e in der Gebrauchsstellung ein Verriegelelement 146e. Das Verriegelelement 142e ist dazu vorgesehen, das Abstützmodul 128e in der Verriegelstellung zu verriegeln. Das Verriegelelement 146e ist als ein Hakenelement ausgebildet. Das Verriegelelement 146e ist beweglich an der Aufständereinheit 12 angeordnet. Das Verriegelelement 146e ist verschwenkbar an dem vorderen Querträger 14 angebunden. An einem ersten Ende ist das Verriegelelement 146e über eine nicht näher dargestellte Lagerstelle schwenkbar an den vorderen Querträger 14e angebunden. An einem zweiten Ende weist das Verriegelelement 146e ein Formschlusselement 148e auf. Das Formschlusselement 48e ist als ein Haken ausgebildet. Das Formschlusselement 148e des Verriegelelements 146e ist zur Verrieglung des Abstützmoduls 128e dazu vorgesehen in einen formschlüssigen Kontakt mit dem ersten Trägerelement 130e des Abstützmoduls 128e zu kommen. Das erste Trägerelement 130e weist ein Formschlusselement 150e auf, das korrespondierend zu dem Formschlusselement 148e des Verriegelelements 146e ausgebildet ist. Das Verriegelelement 146e ist zur Verriegelung mit seinem Formschlusselement 148e in das Formschlusselement 150e des ersten Trägerelements 130e einzugreifen. Das Verriegelelement 146e greift mit seinem Formschlusselement 148e in einer Verriegelstellung des Verriegelelements 146e in das Formschlusselement 150e des ersten Trägerelements 130e ein. Das Verriegelelement 146e sperrt das erste Trägerelement 130e gegen eine Rotation um den vorderen Querträger 14e, wenn das Formschlusselement 148e in das Formschlusselement 150e des ersten Trägerelements 130e eingreift. Das Verriegelelement 146e sperrt eine Rotation des ersten Trägerelements 130e in einer Rotationsrichtung, die einer Verstellung der verstellbaren Teileinheit 42e von der Gebrauchsstellung in die Verstaustellung entspricht. In der Verriegelstellung wird eine Kraft, die von einem auf dem Flugzeugsitz 10e sitzenden Passagier in die vordere Teileinheit 42e eingeleitet wird, über die Trägerelemente 130e, 136e des Abstützmoduls 128e über das Verriegelelement 146e in die Aufständereinheit 12e, insbesondere den vorderen Querträger 14e eingeleitet. Das Formschlusselement 150e des ersten Trägerelements 130e ist als eine Ausnehmung ausgebildet. Das Formschlusselement 150e des ersten Trägerelements 130e ist in einem Bereich des Aufnahmebereichs 132e des ersten Trägerelements 130e angeordnet. Bei einer Rotation des ersten Trägerelements 130e um den vorderen Querträger 14e verschiebt sich das Formschlusselement 150e relativ zu dem Verriegelelement 146e. In der Verriegelstellung der Verriegelungseinheit 90e, in der die verstellbare Teileinheit 42e in ihrer Gebrauchsstellung angeordnet ist, ist das Formschlusselement 150e des ersten Trägerelements 130e in Deckung mit dem Formschlusselement 148e des Verriegelelements 146e ausgerichtet. In der Verriegelstellung der Verriegelungseinheit 90e, in der die verstellbare Teileinheit 42e in ihrer Gebrauchsstellung angeordnet ist, kann das Formschlusselement 148e des Verriegelelements 146e in das Formschlusselement 150e des ersten Trägerelements eingreifen. In der Verriegelstellung in der das Formschlusselement 148e des Verriegelelements 146e in das Formschlusselement 150e des ersten Trägerelements 130e des Abstützmoduls 128e eingreift ist die Verriegelungseinheit 90e in einem Verriegelungszustand. In einem Freigabezustand der Verriegelungseinheit 90e ist das Verriegelelement 146e nicht formschlüssig mit dem Formschlusselement 150e des ersten Trägerelements 130e verbunden. In dem Freigabezustand der Verriegelungseinheit 90e ist das Verriegelelement 146e in einer Freigabestellung angeordnet. In der Freigabestellung ist das Verriegelelement 146e aus der Verriegelstellung nach oben in Richtung des Sitzbodens 30e verschwenkt.

Die Verriegelungseinheit 90e weist ein Betätigungselement 152e auf. Das Betätigungselement 152e ist dazu vorgesehen, die Verriegelungseinheit 90e zu betätigen. Das Betätigungselement 152e ist dazu vorgesehen, durch eine Sitzkraft, die auf den Sitzboden 30e, insbesondere auf die Haupteinheit 34e des Sitzbodens 30e wirkt, betätigt zu werden. Das Betätigungselement 152e weist eine Ruhestellung und eine Betätigungsstellung auf. Die Ruhestellung ist als eine Neutralstellung des Betätigungselements 152e ausgebildet, in der insbesondere keine auf die Haupteinheit 34e des Sitzbodens 30e wirkende Sitzkraft auf das Betätigungselement 152e wirkt. Die Verriegelungseinheit 90e weist ein Federmodul 154e auf. Das Federmodul 154e ist dazu vorgesehen, eine Federkraft auf das Betätigungselement 152e auszuüben, die in Richtung der Ruhestellung des Betätigungselements 152e wirkt. In einem Zustand in dem keine auf die Haupteinheit 34e des Sitzbodens 30e wirkende Kraft auf das Betätigungselement 152e wirkt, ist das Betätigungselement 152e über die Federkraft des Federmoduls 154e in seiner Ruhestellung gehalten. Das Betätigungselement 152e ist dazu vorgesehen, das Verriegelelement 146e zu betätigen. Das Betätigungselement 152e ist dazu vorgesehen, das Verriegelelement 146e zwischen seiner Verriegelstellung und seiner Freigabestellung zu verstellen. Das Betätigungselement 152e ist mit dem Verriegelelement 146e gekoppelt. In der Ruhestellung des Betätigungselements 152e hält das Betätigungselement 152e das Verriegelelement 146e in seiner Freigabestellung.

Das Betätigungselement 152e ist als ein plattenförmiges Element ausgebildet. Das Betätigungselement 152e ist auf einer Oberseite des Grundkörpers 36e der Haupteinheit 34e angeordnet. In einem montierten Zustand ist das Betätigungselement 152e zwischen dem Grundkörper 36e und der Polstereinheit 38e der Haupteinheit 34e angeordnet. Grundsätzlich ist es auch denkbar, dass die gesamte Haupteinheit 34e das Betätigungselement 152e ausbildet. Grundsätzlich ist es ebenso denkbar, dass das Betätigungselement 152e unterhalb des Sitzbodens, insbesondere unterhalb des Grundköpers 36e der Haupteinheit 34e des Sitzbodens 30e angeordnet ist. Das Betätigungselement 152e bildet an seiner Oberseite eine Betätigungsfläche auf. Das Betätigungselement 152e, insbesondere die Betätigungsfläche erstrecken sich dabei über etwa 50% des Teilsitzbereichs 114e der Haupteinheit 34e. Das Betätigungselement 152e weist eine Breite von 200 mm auf. Die Breite wird dabei orthogonal zur Sitzrichtung des Flugzeugsitzes gemessen. Das Betätigungselement 152e weist eine Länge von 125 mm auf. Die Länge des Betätigungselements 152e wird in Sitzrichtung des Flugzeugsitzes 10e gemessen. Das Betätigungselement 152e ist an seinem hinteren Ende mit dem Grundkörper 36e der Haupteinheit 34e verbunden. Das Betätigungselement 152e ist verschwenkbar mit dem Grundkörper 36e der Haupteinheit 34e verbunden. Zur Anbindung des Betätigungselements 152e weist der Grundkörper 36e eine Lagerstelle 156e auf. Die Lagerstelle 156e ist in einem hinteren, der Rückenlehne 26e zugewandten Bereich des Grundköpers 36e angeordnet. Das Betätigungselement 152e erstreckt sich von der Lagerstelle 156e bis in ein vorderes Drittel des Grundkörpers 36e. In einem vorderen Bereich des Betätigungselements 152e ist das Federmodul 154e angeordnet.

Das Federmodul 154e ist zwischen dem Grundköper 36e und dem Betätigungselement 152e angeordnet. Das Federmodul 154e übt eine Federkraft auf das Betätigungselement 152e aus, die das Betätigungselement 152e von dem Grundkörper 36e wegdrückt. In der Ruhestellung ist das Betätigungselement 152e von dem Federmodul 154e mit seinem vorderen Ende von dem Grundkörper 36e der Haupteinheit 34e weggedrückt. In der Betätigungsstellung ist das Betätigungselement 152e durch eine Kraft, wie insbesondere eine Sitzkraft, entgegen der Federkraft des Federmoduls 154e mit seinem vorderen Ende auf die Oberseite des Grundkörpers 36e gedrückt. Das Federmodul 154e weist zwei Druckfedern 158e, 160e auf. Die beiden Druckfedern 158e, 160e sind in Seitenbereichen des Betätigungselements 152 angeordnet. Grundsätzlich ist es auch denkbar, dass das Federmodul eine andere Anzahl an Federelementen aufweist, wobei grundsätzlich auch denkbar ist, dass die Federelemente als andere Federn ausgebildet sind als Druckfedern. Dadurch kann eine vorteilhafte Krafteinleitung in das Betätigungselement 154e erreicht werden.

Zur Kopplung mit dem Verriegelelement 146e weist das Betätigungselement 152e ein Koppelbereich 162e auf. Zur Ausbildung des Koppelbereichs 162e weist das Betätigungselement 152e an seinem vorderen Ende nach unten verlaufende Stege 164e auf. Die Stege 164e sind als Mitnehmer zur Entriegelung des Verriegelelements 146e ausgebildet. Grundsätzlich ist es auch denkbar, dass das Betätigungselement 152e anders ausgebildete Mitnehmer für das Verriegelelement 146e aufweist, wie beispielsweise Schlaufenelemente aus einem biegeweichen Material, beispielsweise aus einem Draht oder einem Seil. Die Stege 164e erstrecken sich bis unter den Grundkörper 36e. Dazu weist der Grundkörper 36e ein Durchgangsloch 166e auf, das in einem montierten Zustand in dem Bereich des Steges 164e angeordnet ist. Das Betätigungselement 152e erstreckt sich mit seinen Stegen 164e durch das Durchgangsloch 166e von der Oberseite des Grundköpers 36e auf eine Unterseite des Grundköpers 36e. An einem unteren Ende weisen die Stege 164e einen Knick auf, durch den der Koppelbereich 162e gebildet ist. In dem Koppelbereich 162e sind die Stege 164e des Betätigungselements 152e mit dem Verriegelelement 146e gekoppelt. In dem Koppelbereich 162e sind die Stege 164e zumindest in der Ruhestellung des Betätigungselements 152e formschlüssig mit dem Verriegelelement 146e verbunden. Durch den Koppelbereich 162e hält das Betätigungselement 152e das Verriegelelement 146e in der Ruhestellung des Betätigungselements 152e in seiner Freigabestellung. In der Betätigungsstellung des Betätigungselements 152e sind die Stege 164e und damit der Koppelbereich 162e nach unten bewegt, wodurch eine Bewegung des Verriegelelements 146e freigegeben ist, und dieses in die Verriegelstellung gebracht werden kann. Bei einer Bewegung des Betätigungselements 152e von seiner Ruhestellung in seine Betätigungsstellung bewegen sich die Stege 164e und dadurch der Koppelbereich 162e nach unten und eine formschlüssige Kopplung zwischen dem Koppelbereich 162e und dem Verriegelelement 146e löst sich und das Verriegelelement 146e kann aus seiner Freigabestellung herausbewegt werden. Dabei wird das Verriegelelement 146e nach einer Freigabe von dem Koppelbereich 162e lediglich durch die Schwerkraft von seiner Freigabestellung in Richtung seiner Verriegelstellung bewegt. Grundsätzlich ist es aber ebenso denkbar, dass die Verriegelungseinheit 90e ein zusätzliches Federelement aufweist, das eine Kraft auf das Verriegelelement 146e ausübt, die eine Bewegung des Verriegelelements 146e von der Freigabestellung in die Verriegelstellung unterstützt. Ist das Verriegelelement 146e von dem Betätigungselement 152e freigegeben und dadurch nicht mehr in der Freigabestellung gehalten, liegt das Verriegelelement 146e mit seinem Formschlusselement 148e auf einem Außenumfang 168e des Aufnahmebereichs 132e des ersten Trägerelements 130e des Abstützmoduls 128e auf, wenn die verstellbare Teileinheit 42e in ihrer Verstaustellung, bzw. insbesondere nicht in ihrer Gebrauchsstellung angeordnet ist. Ist das Verriegelelement 146e von dem Betätigungselement 152e freigegeben und dadurch nicht mehr in der Freigabestellung gehalten, rastet das Verriegelungselement 146e mit seinem Formschlusselement 148e in dem Formschlusselement 150e des ersten Trägerelements 130e ein, wenn die verstellbare Teileinheit 42e in ihrer Gebrauchsstellung angeordnet ist und dadurch das Formschlusselement 150e des ersten Trägerelements 130e in Deckung mit dem Formschlusselement 148e des Verriegelelements 146e gebracht ist. Ist die Verriegelungseinheit 90e in ihrer Verriegelstellung, in der also das Verriegelelement 146e durch einen Formschluss seines Formschlusselements 148e mit dem Formschlusselement 150e des ersten Trägerelements 130e das Abstützmodul 128e verriegelt und so die verstellbare Teileinheit 42e in seiner Gebrauchsstellung fixiert, wird das Verriegelelement 146e bei einer Verstellung des Betätigungselements von seiner Betätigungsstellung in seine Ruhestellung mittels des Koppelbereichs 162e mitgenommen und von seiner Verriegelstellung in seine Freigabestellung bewegt. Dadurch ist eine Verriegelung des ersten Trägerelements 130e aufgehoben und das Abstützmodul 128e klappt durch die Gewichtskraft der verstellbaren Teileinheit 42e automatisch zusammen und das erste Trägerelement 130e schwenkt so um den vorderen Querträger 14e, dass die verstellbare Teileinheit 42e von ihrer Gebrauchsstellung in die Verstaustellung zurückbewegt wird.

Die Flugzeugsitzvorrichtung weist wenigstens ein Verzögerungsmodul 170e auf. Das Verzögerungsmodul 170e ist dazu vorgesehen, die verstellbare Teileinheit 46e nach einem Wegfall einer Halte- und/oder Verriegelkraft für ein definiertes Zeitintervall in der Gebrauchsstellung zu halten. Das Verzögerungsmodul 170e ist an der Verriegelungseinheit 90e angeordnet. Das Verzögerungsmodul 170e ist dazu vorgesehen, eine Rückstellung des Betätigungselements 152e von seiner Betätigungsstellung in die Ruhestellung zu verzögern, nachdem die Kraft auf das Betätigungselement 152e, insbesondere die durch einen Passagier ausgeübte Sitzkraft, weggefallen ist. Das geschieht insbesondere dann, wenn ein Passagier von dem Flugzeugsitz 10e, insbesondere dem Sitzboden 30e aufsteht. Das Verzögerungsmodul 170e ist dazu vorgesehen, das Betätigungselement 152e nach Wegfall der Betätigungskraft, insbesondere der Sitzkraft, für ein definiertes Zeitintervall in seiner Betätigungsstellung zu halten. Dazu weist das Verzögerungsmodul 170e ein Dämpfungselement auf. Das definierte Zeitintervall beträgt fünf Sekunden. Dadurch bleibt die Verriegelungseinheit 90e während des definierten Zeitintervalls nach dem Wegfall der Betätigungskraft in der Verriegelstellung und hält somit die verstellbare Teileinheit 42e in ihrer Gebrauchsstellung, insofern diese zu dem Zeitpunkt in der Gebrauchsstellung angeordnet ist. Nach Ablauf des definierten Zeitintervalls gibt das Verzögerungsmodul 170e die Bewegung des Betätigungselements 152e frei, wodurch dieses von seiner Betätigungsstellung in seine Ruhestellung bewegt wird. Dadurch ist die Verriegelungseinheit 90e in ihrer Freigabestellung und die verstellbare Teileinheit 42e bewegt sich von der Gebrauchsstellung in die Verstaustellung. Wird eine Betätigungskraft vor dem Ablauf des definierten Zeitintervalls wieder auf das Betätigungselement 152e aufgebaut, so bleibt die Verriegelungseinheit 90e in der Verriegelstellung. Dadurch kann vorteilhaft erreicht werden, dass die verstellbare Teileinheit 42e in der Gebrauchsstellung verbleibt, selbst wenn eine Kraft auf das Betätigungselement 152e kurzzeitig wegfällt, beispielsweise dadurch, dass der Passagier kurz von dem Flugzeugsitz 10e aufsteht. Grundsätzlich ist es auch denkbar, dass das Verzögerungsmodul 170e direkt an die verstellbare Teileinheit 42e angebunden ist. Dabei ist es beispielsweise denkbar, dass das Verzögerungsmodul 170e in das Abstützmodul 128e integriert ist. Dabei wäre das Verzögerungsmodul 170e dazu vorgesehen, eine Bewegung der verstellbaren Teileinheit und/oder des Abstützmoduls 128e für das definierte Zeitintervall in der Gebrauchsstellung, bzw. in der Verriegelstellung zu halten, obwohl die Verriegelungseinheit in ihrer Freigabestellung angeordnet ist.

Im Folgenden soll kurz eine Funktionsweise der Flugzeugsitzvorrichtung und eine Verstellung der verstellbaren Teileinheit 42e durch einen Passagier beschrieben werden. In einem Zustand in dem kein Passagier auf dem Flugzeugsitz 10e sitzt ist die verstellbare Teileinheit 42e in ihrer Verstaustellung. Dabei ist die verstellbare Teileinheit 42e nach unten geklappt. Dabei ist die verstellbare Teileinheit insbesondere nicht in dem Fluchtweg angeordnet und gibt diesen für eine besonders vorteilhaft und barrierefreie Nutzung frei. Setzt sich nun ein Passagier auf den Flugzeugsitz 10e, insbesondere auf die Haupteinheit 34e des Sitzbodens 30e, verstellt der Passagier das Betätigungselement 152e durch seine Gewichtskraft gegen die Federkraft des Federmoduls 154e von der Ruhestellung in die Betätigungsstellung. Dadurch gibt das Betätigungselement 152e das Verriegelelement 146e frei, sodass dieses nicht mehr in seiner Freigabestellung fixiert ist. Zunächst kann das Verriegelelement 146e mit seinem Formschlusselement 148e lediglich auf dem Außenumfang 168e des Aufnahmebereichs 132e des ersten Trägerelements 130e des Abstützmoduls 128e aufliegen. Der Passagier kann nun die verstellbare Teileinheit 42e händisch aus der Verstaustellung heraus in Richtung der Gebrauchsstellung bewegen. Dabei kann der Passagier an einer beliebigen Stelle der verstellbaren Teileinheit 42e angreifen. Grundsätzlich ist es auch denkbar, dass die verstellbare Teileinheit 42e ein separates Griffelement aufweist, wie beispielsweise eine Schlaufe, die dazu vorgesehen ist, dass ein Passagier es ergreifen und die verstellbare Teileinheit 42e aus seiner Verstaustellung heraus zu bewegen. Sobald die verstellbare Teileinheit 42e in ihre Gebrauchsstellung geschwenkt ist, ist das Formschlusselement 150e des ersten Trägerelements 130e des Abstützmoduls 128e in Deckung mit dem Formschlusselement 148e des Verriegelelements 146e gebracht. Dabei rastet das Verriegelelement 146e mit seinem Formschlusselement 148e selbsttätig in das Formschusselement 150e ein und verriegelt die Verriegelungseinheit 90e. Die verstellbare Teileinheit 42e ist so in der Gebrauchsstellung verriegelt und bildet zusammen mit der Haupteinheit 34e den gesamten Sitzbereich 32e des Sitzbodens 30 aus. So lange der Passagier auf dem Sitzboden 30e und insbesondere auf der Haupteinheit 34e sitzt und eine Kraft auf das Betätigungselement 152e in seiner Betätigungsstellung hält bleibt die verstellbare Teileinheit 42e in ihrer Gebrauchsstellung. Eine Sitzkraft die auf die verstellbare Teileinheit 42e wirkt, wird über den Grundkörper 48e in das zweite Trägerelement 136e in das zweite Trägerelement 130e geleitet, wo es ein Drehmoment um den vorderen Querträger erzeugt, das von dem Verriegelelement 146e aufgenommen und in die Aufständereinheit 12e eingeleitet wird. Steht der Passagier von dem Flugzeugsitz 10e auf, drückt das Federmodul 154e das Betätigungselement 152e aus der Betätigungsstellung in seine Ruhestellung. Dabei nimmt der Koppelbereich 162e das Verriegelelement 146e von seiner Verriegelstellung in seine Freigabestellung mit, wodurch sich die formschlüssige Verbindung zwischen dem Formschlusselement 150e des ersten Trägerelements 130 und dem Formschlusselement 148e des Verriegelelements 146e löst. Das erste Trägerelement 130e kann über seinen Aufnahmebereich 132e wieder frei um den vorderen Querträger 14e drehen. Durch die Gewichtskraft der verstellbaren Teileinheit 42e werden die Trägerelemente 130e, 136e nach unten gedrückt und die verstellbare Teileinheit 42e bewegt sich selbsttätig zurück in die Verstaustellung. Die verstellbare Teileinheit 42e verstellt sich also nachdem ein Passagier von dem Sitzboden 30e des Flugzeugsitzes 10e aufgestanden ist selbsttätig, also ohne weiteres zutun des Passagiers von der Gebrauchsstellung in die Verstaustellung. Dadurch kann der Fluchtweg besonders vorteilhaft frei gemacht werden, sobald der Flugzeugsitz 10e nicht mehr benutzt wird.

### Bezugszeichen

- 10: Flugzeugsitz
- 12: Aufständereinheit
- 14: Querträger
- 16: Querträger
- 18: Sitzteiler
- 20: Sitzteiler
- 22: Armlehne
- 24: Armlehne
- 26: Rückenlehne
- 28: Bedienelement
- 30: Sitzboden
- 32: Sitzbereich
- 34: Haupteinheit
- 36: Grundkörper
- 38: Polstereinheit
- 40: Sitzbereich
- 42: verstellbare Teileinheit
- 44: Zusatzsitzbereich
- 46: Polstereinheit
- 48: Grundkörper
- 50: Lagermodul
- 52: Lagerbock
- 54: Lagerbock
- 56: Lageraufnahme
- 58: Lageraufnahme
- 60: Haltearm
- 62: Haltearm
- 64: Anbindungsbereich
- 66: Anbindungsbereich
- 68: Betätigungsmechanismus
- 70: Aktuatorelement
- 72: Betätigungsstange
- 74: Anbindungspunkt
- 76: Bedienelement
- 78: Kissen
- 80: Verbindungslinie
- 82: Schonbezug
- 84: Spalt
- 86: Sensorvorrichtung
- 88: Drucksensor
- 90: Verriegelungseinheit
- 92: Steuergerät
- 94: Drucksensor
- 96: Sensorelement
- 98: Rahmen
- 100: Gewebe
- 102: Torsionselement
- 104: Federblech
- 106: Schwenkachse
- 108: Anbindungsbock
- 110: Fluchtweg
- 112: Sitzfuß
- 114: Teilsitzbereich
- 116: Teilsitzbereich
- 118: vordere Kante
- 120: Querträgermodul
- 122: Scharnier
- 124: Anbindungselement
- 126: Anbindungselement
- 128: Abstützmodul
- 130: Trägerelement
- 132: Aufnahmebereich
- 134: Steg
- 136: Trägerelement
- 138: Bolzen
- 140: Lagerbolzen
- 142: Anschlag
- 144: Anschlagsbolzen
- 146: Verriegelelement
- 148: Formschlusselement
- 150: Formschlusselement
- 152: Betätigungselement
- 154: Federmodul
- 156: Lagerstelle
- 158: Druckfeder
- 160: Druckfeder
- 162: Koppelbereich
- 164: Stege
- 166: Durchgangsloch
- 168: Außenumfang
- 170: Verzögerungsmodul

## Patentansprüche

1. Flugzeugsitzvorrichtung für einen Flugzeugsitz (10e), mit wenigstens einer Aufständereinheit (12e), mit wenigstens einem, mit der Aufständereinheit (12e) gekoppelten Sitzboden (30e), der dazu vorgesehen ist, einen Sitzbereich (32e) auszubilden, und dazu wenigstens eine Haupteinheit (34e) und wenigstens eine, zwischen einer Verstaustellung und einer Gebrauchsstellung verstellbar zu der Aufständereinheit (12e) ausgebildete Teileinheit (42e) aufweist, wobei die zumindest eine verstellbare Teileinheit (42e) dazu vorgesehen ist, den Sitzbereich (32e) in zumindest einer Stellung zu vergrößern, und mit wenigstens einem Betätigungsmechanismus (68e), mittels dessen die verstellbare Teileinheit (42e) des Sitzbodens (30e) zwischen ihrer Verstaustellung und ihrer Gebrauchsstellung verstellbar ist, wobei wenigstens ein Verzögerungsmodul (170e) dazu vorgesehen ist, die verstellbare Teileinheit (42e) nach Wegfall einer Halte- und/oder Verriegelkraft zumindest für ein definiertes Zeitintervall in der Gebrauchsstellung zu halten, **gekennzeichnet durch** eine Verriegelungseinheit (90e), die dazu vorgesehen ist, die verstellbare Teileinheit (42e) in der Gebrauchsstellung mechanisch zu verriegeln, wobei die Verriegelungseinheit (90e) während des definierten Zeitintervalls nach Wegfall einer Betätigungskraft in einer Verriegelstellung bleibt und die verstellbare Teileinheit (42e) in der Gebrauchsstellung, insofern diese zu dem Zeitpunkt in der Gebrauchsstellung angeordnet ist, hält.

2. Flugzeugsitzvorrichtung nach Anspruch 1, **dadurch gekennzeichnet, dass** die verstellbare Teileinheit (42a; 42b; 42c; 42d) dazu vorgesehen ist, mittels des wenigstens einen Betätigungsmechanismus (68a; 68b; 68c) zwischen ihrer Verstaustellung und ihrer Gebrauchsstellung stufenlos arretierbar zu sein.

3. Flugzeugsitzvorrichtung nach Anspruch 1 oder 2, **dadurch gekennzeichnet, dass** der wenigstens eine Betätigungsmechanismus (68a) wenigstens ein Bedienelement (76a) aufweist, über das die verstellbare Teileinheit (42a) durch einen Passagier verstellbar ist.

4. Flugzeugsitzvorrichtung nach einem der vorhergehenden Ansprüche, **dadurch gekennzeichnet, dass** der Betätigungsmechanismus (68b; 68c) wenigstens eine Sensorvorrichtung (86b; 86c) umfasst, die zur Verstellung der verstellbaren Teileinheit (42b; 42c) wenigstens ein Sensorsignal erfasst.

5. Flugzeugsitzvorrichtung nach einem der vorhergehenden Ansprüche, **dadurch gekennzeichnet, dass** der Betätigungsmechanismus (68a; 68b; 68c) wenigstens ein Aktuatorelement (70a; 70b; 70c) umfasst, das von dem Bedienelement (76a) und/oder von der Sensorvorrichtung (86b; 86c) zur Verstellung der verstellbaren Teileinheit (42a; 42b; 42c) ansteuerbar ist.

6. Flugzeugsitzvorrichtung nach Anspruch 5, **dadurch gekennzeichnet, dass** das Aktuatorelement (70a; 70b) als ein Federelement ausgebildet ist.

7. Flugzeugsitzvorrichtung zumindest nach Anspruch 5, **dadurch gekennzeichnet, dass** das Aktuatorelement (70d) als ein elektrischer Stellmotor ausgebildet ist.

8. Flugzeugsitzvorrichtung zumindest nach Anspruch 4, **dadurch gekennzeichnet, dass** die Sensorvorrichtung (86b; 86c) zumindest dazu vorgesehen ist, zur Auslösung der Verstellung der verstellbaren Teileinheit (42b; 42d) eine auf den Sitzboden (30b; 30c) wirkende Sitzkraft zu erfassen.

9. Flugzeugsitzvorrichtung nach einem der vorhergehenden Ansprüche, **dadurch gekennzeichnet, dass** die verstellbare Teileinheit (42a) zwei Anbindungsbereiche (64a, 64b) aufweist, über die die Teileinheit (42a) an die Aufständereinheit (12a) angebunden ist, wobei die Anbindungsbereiche (64a, 64b) in einem äußeren Bereich der Teileinheit (42a) angeordnet sind.

10. Flugzeugsitzvorrichtung nach einem der vorhergehenden Ansprüche, **dadurch gekennzeichnet, dass** die verstellbare Teileinheit (42d) zumindest von einem Bespannung gebildet ist.

11. Flugzeugsitzvorrichtung nach einem der vorhergehenden Ansprüche, **dadurch gekennzeichnet, dass** die Verstellung der verstellbaren Teileinheit (42a) an eine Verstellung einer Rückenlehne (26a) gekoppelt ist.

12. Flugzeugsitzvorrichtung nach einem der vorhergehenden Ansprüche, **gekennzeichnet durch** eine Rückenlehne (26a), die wenigstens ein Zusatzkissen (78a) umfasst, das zwischen einer Sitzstellung und einer Komfortstellung zu der Rückenlehne (26a) verstellbar ist.

13. Flugzeugsitzvorrichtung nach einem der vorhergehenden Ansprüche, **dadurch gekennzeichnet, dass** der Betätigungsmechanismus (68e) für eine rein händische Betätigung der verstellbaren Teileinheit (42e) von der Verstaustellung in die Gebrauchsstellung vorgesehen ist.

14. Flugzeugsitzvorrichtung nach einem der vorhergehenden Ansprüche, **dadurch gekennzeichnet, dass** der wenigstens eine Verriegelungsmechanismus (90e) zur Verriegelung der verstellbaren Teileinheit (42e) in einer Gebrauchsstellung dazu vorgesehen ist, durch eine auf den Sitzboden (30e) wirkende Sitzkraft in eine Verriegelstellung gebracht zu werden.

15. Flugzeugsitzvorrichtung nach Anspruch 14, **dadurch gekennzeichnet, dass** der Verriegelungsmechanismus (90e) wenigstens ein Betätigungselement (152e) aufweist, das in einem Sitzbereich (32e) des Sitzbodens (30e) angeordnet ist.

16. Flugzeugsitzvorrichtung nach Anspruch 15, **dadurch gekennzeichnet, dass** das Betätigungselement (152e) zumindest 30% eines Teilsitzbereichs (114e) der Haupteinheit (34e) des Sitzbodens (30e) überspannt.

17. Flugzeugsitz mit einer Flugzeugsitzvorrichtung nach einem der vorhergehenden Ansprüche.

## Claims

1. Aircraft seat device for an aircraft seat (1 0e),
having at least one mounting unit (12e),
having at least one seat bottom (30e) which is coupled with the mounting unit (12e), which is configured to form a seating region (32e) and to this end has at least one main unit (34e) and at least one sub-unit (42e) that is implemented so as to be adjustable in relation to the mounting unit (12e) between a stowage position and a use position, the at least one adjustable sub-unit (42e) being configured for enlarging the seating region (32e) in at least one position,
and having at least one actuation mechanism (68e) by means of which the adjustable sub-unit (42e) of the seat bottom (30e) is adjustable between its stowage position and its use position,
wherein at least one delay module (170e) is configured, following a discontinuation of a holding and/or locking force, to hold the adjustable sub-unit (42e) in the use position at least for a defined time interval,
**characterized by** a locking unit (90e), which is configured for locking the adjustable sub-unit (42e) mechanically in the use position,
wherein the locking unit (90e) remains in a locking position during the defined time interval after discontinuation of an actuation force and holds the adjustable sub-unit (42e) in the use position insofar as the adjustable sub-unit (42e) is in the use position at this moment.

2. Aircraft seat device according to claim 1,
**characterized in that** the adjustable sub-unit (42e) is configured to be continuously blockable between its stowage position and its use position by means of the at least one actuation mechanism (68a; 68b; 68c).

3. Aircraft seat device according to claim 1 or 2,
**characterised in that** the at least one actuation mechanism (68a) has at least one actuation element (76a) via which the adjustable sub-unit (42a) can be adjusted by a passenger.

4. Aircraft seat device according to one of the preceding claims,
**characterised in that** the actuation mechanism (68b; 68c) comprises at least one sensor device (86b; 86c) which, for an adjustment of the adjustable sub-unit (42b; 42c), detects at least one sensor signal.

5. Aircraft seat device according to one of the preceding claims,
**characterised in that** the actuation mechanism (68a; 68b; 68c) comprises at least one actuator element (70a; 70b; 70c) which, for an adjustment of the adjustable sub-unit (42a; 42b; 42c), is actuatable by the actuation element (76a) and/or by the sensor device (86b; 86c).

6. Aircraft seat device according to claim 5,
**characterized in that** the actuator element (70a; 70b) is embodied as a spring element.

7. Aircraft seat device at least according to claim 5,
**characterized in that** the actuator element (70d) is embodied as an electric servomotor.

8. Aircraft seat device at least according to claim 4,
**characterized in that** for triggering the adjustment of the adjustable sub-unit (42b; 42d), the sensor device (86b; 86c) is configured at least for a detection of a sitting force acting onto the seat bottom (30b; 30c).

9. Aircraft seat device according to one of the preceding claims,
**characterised in that** the adjustable sub-unit (42a) has two connection regions (64a; 64b) via which the sub-unit (42a) is connected to the mounting unit (12a), said connection regions (64a; 64b) being disposed in an outer region of the sub-unit (42a).

10. Aircraft seat device according to one of the preceding claims,
**characterised in that** the adjustable sub-unit (42d) is implemented at least by a covering.

11. Aircraft seat device according to one of the preceding claims,
**characterised in that** the adjustment of the adjustable sub-unit (42a) is coupled with an adjustment of a backrest (26a).

12. Aircraft seat device according to one of the preceding claims,
**characterised by** a backrest (26a) comprising at least one additional cushion (78a), which in relation to the backrest (26a) is adjustable between a sitting position and a comfort position.

13. Aircraft seat device according to one of the preceding claims,
**characterised in that** the actuation mechanism (68e) is configured for a purely manual actuation of the adjustable sub-unit (42e) from the stowage position into the use position.

14. Aircraft seat device according to one of the preceding claims,
**characterised in that** for locking the adjustable sub-unit (42e) in a use position, the at least one locking mechanism (90e) is configured to be brought into a locking position by a sitting force acting onto the seat bottom (30e).

15. Aircraft seat device according to claim 14,
**characterised in that** the locking mechanism (90e) has at least one actuation element (152e), which is disposed in a seating region (32e) of the seat bottom (30e).

16. Aircraft seat device according to claim 15,
**characterised in that** the actuation element (152e) spans at least 30% of a seating sub-region (114e) of the main unit (34e) of the seat bottom (30e).

17. Aircraft seat with an aircraft seat device according to one of the preceding claims.

## Revendications

1. Dispositif de siège d'avion pour un siège d'avion (10e),
avec au moins une unité de structure élevée (12e),
avec au moins une base de siège (30e) qui est couplée avec l'unité de structure élevée (12e) et prévue pour former une zone d'assise (32e), comprenant à cette fin au moins une unité principale (34e) et au moins une sub-unité (42e) qui est formée pour être ajustable par rapport à l'unité de structure élevée (12e) entre une position de rangement et une position d'usage, l'au moins une sub-unité ajustable (42e) étant prévue pour élargir la zone d'assise (32e) dans au moins une position, et
avec au moins un mécanisme d'actionnement (68e) par le biais duquel la sub-unité ajustable (42e) de la base de siège (30e) peut être ajustée entre sa position de rangement et sa position d'usage,
où au moins un module retardant (170e) est prévu pour retenir la sub-unité ajustable (42e) dans la position d'usage au moins pour un intervalle de temps défini après la cessation d'une force de retenue et/ou de verrouillage, **caractérisé par** une unité de verrouillage (90e) qui est prévue pour verrouiller la sub-unité ajustable (42e) mécaniquement dans la position d'usage,
où pendant l'intervalle de temps défini après la cessation d'une force d'actionnement, l'unité de verrouillage (90e) continue dans une position de verrouillage en retenant la sub-unité ajustable (42e) dans la position d'usage si ladite sub-unité ajustable (42e) est dans la position d'usage à ce moment.

2. Dispositif de siège d'avion selon la revendication 1,
**caractérisé en ce que** la sub-unité ajustable (42a ; 42b ; 42c ; 42d) est prévue pour être bloquée en continu entre sa position de rangement et sa position d'usage par le biais de l'au moins un mécanisme d'actionnement (68a ; 68b ; 68c).

3. Dispositif de siège d'avion selon la revendication 1 ou 2,
**caractérisé en ce que** l'au moins un mécanisme d'actionnement (68a) comprend au moins un élément de commande (76a) moyennant lequel la sub-unité ajustable (42a) est ajustable par un passager.

4. Dispositif de siège d'avion selon l'une des revendications précédentes,
**caractérisé en ce que** le mécanisme d'actionnement (68b ; 68c) comprend au moins un dispositif de capteur (86b ; 86c) qui détecte au moins un signal de capteur pour l'ajustement de la sub-unité ajustable (42b ; 42c).

5. Dispositif de siège d'avion selon l'une des revendications précédentes,
**caractérisé en ce que** le mécanisme d'actionnement (68a ; 68b ; 68c) comprend au moins un élément actuateur (70a ; 70b ; 70c) qui peut être actionné par l'élément de commande (76a) et/ou par le dispositif de capteur (86b ; 86c) pour l'ajustement de la sub-unité ajustable (42b ; 42c).

6. Dispositif de siège d'avion selon la revendication 5,
**caractérisé en ce que** l'élément actuateur (70a ; 70b) est réalisé comme élément à ressort.

7. Dispositif de siège d'avion au moins selon la revendication 5,
**caractérisé en ce que** l'élément actuateur (70d) est réalisé comme servomoteur électrique.

8. Dispositif de siège d'avion au moins selon la revendication 4,
**caractérisé en ce que** le dispositif de capteur (86b ; 86c) est prévu au moins pour détecter une force d'assise agissant sur la base de siège (30b ; 30c) afin de déclencher l'ajustement de la sub-unité ajustable (42b ; 42c).

9. Dispositif de siège d'avion selon l'une des revendications précédentes,
**caractérisé en ce que** la sub-unité ajustable (42a) comprend deux zones de raccordement (64a ; 64b) moyennant lesquelles la sub-unité ajustable (42a) est raccordée à l'unité de structure élevée (12a), les zones de raccordement (64a ; 64b) étant disposées dans une région périphérique de la sub-unité (42a).

10. Dispositif de siège d'avion selon l'une des revendications précédentes,
**caractérisé en ce que** la sub-unité ajustable (42d) est réalisée au moins par un recouvrement.

11. Dispositif de siège d'avion selon l'une des revendications précédentes,
**caractérisé en ce que** l'ajustement de la sub-unité ajustable (42d) est couplé avec un ajustement d'un dossier (26a).

12. Dispositif de siège d'avion selon l'une des revendications précédentes,
**caractérisé par** un dossier (26a) comprenant au moins un coussin additionnel (78a) qui est ajustable par rapport au dossier (26a) entre une position d'assise et une position de confort.

13. Dispositif de siège d'avion selon l'une des revendications précédentes,
**caractérisé en ce que** le mécanisme d'actionnement (68e) est prévu pour un actionnement seulement manuel de la sub-unité ajustable (42e) de la position de rangement à la position d'usage.

14. Dispositif de siège d'avion selon l'une des revendications précédentes,
**caractérisé en ce que** l'au moins un mécanisme de verrouillage (90e) est prévu, afin de verrouiller la sub-unité ajustable (42e) dans une position d'usage, pour être mis dans une position de verrouillage par une force d'assise agissant sur la base de siège (30e).

15. Dispositif de siège d'avion au moins selon la revendication 14,
**caractérisé en ce que** le mécanisme de verrouillage (90e) comprend au moins un élément d'actionnement (152e) qui est disposé dans une zone d'assise (32e) de la base de siège (30e).

16. Dispositif de siège d'avion selon la revendication 15,
**caractérisé en ce que** l'élément d'actionnement (152e) enjambe au moins 30 % d'une zone d'assise partielle (114e) de l'unité principale (34e) de la base de siège (30e).

17. Siège d'avion avec un dispositif de siège d'avion selon l'une des revendications précédentes.
